Europäisches Patentamt

European Patent Office

Office européen des brevets

(11) Veröffentlichungsnummer: **0 487 842 A2**

# EUROPÄISCHE PATENTANMELDUNG

(21) Anmeldenummer: **91114976.3**

(22) Anmeldetag: **05.09.91**

(51) Int. Cl.5: **B09B 3/00, A62D 3/00, C02F 1/00, B03D 1/00**

Die Anmeldung wird, wie ursprünglich eingereicht, unvollständig veröffentlicht (Art. 93 (2) EPÜ). Die Stelle der Beschreibung oder der Patentansprüche, die offensichtlich eine Auslassung enthält, ist als Lücke an der entsprechenden Stelle ersichtlich.

(30) Priorität: **05.09.90 DE 4028189**

(43) Veröffentlichungstag der Anmeldung:
**03.06.92 Patentblatt 92/23**

(84) Benannte Vertragsstaaten:
**AT BE CH DE DK ES FR GB GR IT LI LU NL SE**

(71) Anmelder: **KARL-HEINZ FECHNER, VERKEHRSANLAGEN GMBH, STAHL-, MASCHINEN- UND APPARATEBAU**
**Winkelhauser Strasse 29-31**
**W-4100 Duisburg 14(DE)**

(72) Erfinder: **Fechner, Karl-Heinz**
**Winkelhauser Strasze 29**
**W-4100 Duisburg 14 (Rheinhausen)(DE)**
Erfinder: **Kaufmann, Dieter**
**Winkelhauser Strasze 31**
**W-4100 Duisburg (Rheinhausen)(DE)**

(74) Vertreter: **Kiefer, Winfried H., Dipl.-Phys.**
**Patentanwalt**
**Kasinostrasse 13/15**
**W-4100 Duisburg1(DE)**

(54) Verfahren und Vorrichtung zum Aufbereiten von kontaminierten Böden und Gewässern.

(57) Zum Aufbereiten von kontaminierten Böden werden kontaminierter Boden und Wasser gemischt, die auf dem Boden-Wasser-Gemisch aufschwimmende, schaumartige und Kontaminationen enthaltende Schicht entfernt, der aufbereitete Boden und das gelöste bzw. suspendierte Stoffe enthaltende Wasser voneinander getrennt. Das Wasser mit den in Lösung gehenden bzw. suspendierten Stoffen des Boden-Wasser-Gemisches wird unter Verwirbelung im Kreislauf so geführt, daß sich zwischen dem Boden-Wasser-Gemisch und der aufschwimmenden, schaumartigen und Kontaminationen enthaltenden Schicht eine von Boden freie Zwischenschicht bildet. In vorgegebenen Zeitintervallen werden die jeweils aufschwimmenden, schaumartigen und Kontamina-tionen enthaltenden Schichten entfernt bis die Lichtabsorption der Zwischenschicht für Licht vorgegebener Wellenlänge jeweils einen konstanten Absorptionswert zeigt. Die Vorrichtung weist prinzipiell einen Arbeitsbehälter auf und der Behälterboden Düsen für die Zufuhr des im Kreislauf zu führenden Wassers. Die Vorrichtung hat weiterhin mit Druckluft beaufschlagbare Düsen und eine Überlaufkante zum Entfernen der aufschwimmenden, schaumartigen und Kontaminationen enthaltenden Schichten und mindestens ein Absaugrohr für Wasser. Entsprechend erfolgt das Aufbereiten von kontaminierten stehenden oder kontaminierten fließenden Gewässern,

Figur 2

Die Erfindung betrifft ein Verfahren zum Aufbereiten von kontaminierten Böden, indem kontaminierter Boden und Wasser gemischt werden, die auf dem Boden-Wasser-Gemisch aufschwimmende, schaumartige und Kontaminationen enthaltende Schicht entfernt, der aufbereitete Boden und das gelöste bzw. suspendierte Stoffe enthaltende Wasser voneinander getrennt werden, sowie eine Vorrichtung zum Durchführen des Verfahrens.

Das Beseitigen von Altlasten in verseuchtem Erdreich ist eines der vordringlichsten Probleme, um die Umweltverschmutzung herabzusetzen. Oft ist es nicht mehr von vornherein feststellbar, welche Kontaminationen in das Erdreich bzw. den Boden eingedrungen sind.

Hinzu treten weitere Probleme, da oft in der Praxis nicht auszuschließen ist, daß auf dem Gelände chemischer oder pharmazeutischer Unternehmen, auf dem Gelände von Hüttenbetrieben, Raffinerien, Verzinkereien, Lackierbetrieben usw., chemische Verbindungen wie Schädlichgsbekämpfungs- und Pflanzenschutzmittel, Öle, Schmiermittel, Leicht- und Schweröle, Transformatoröle, Fette, Säuren, Waschrohstoffe usw., Abwasser von Tankreinigungsanlage über Lecks in Behältern und Leitungen oft unbemerkt in den Boden, d.h. in das Erdreich gelangen und sich dort als Kontaminationen ablagern.

Die Erfindung befasst sich mit dem Aufbereiten derartiger kontaminierter Böden, d.h. kontaminiertem Erdreich, nicht mit dem Entsorgen von Betonböden usw., die ebenfalls Kontaminationen in erheblichen Mengen aufnehmen können.

Es sind Bodenwaschanlagen bekannt, die stationäre Vorichtungen sind, denen das abgetragene und die Kontminationen aufweisende Erdreich zugeführt wird, dieses mit chemischen Lösungsmitteln zu versetzen und dann die Kontaminationen als Gemische extrahiert werden, welche dann als Sondermüll behandelt werden müssen. Dies erfolgt im wesentlichen dadurch, daß diesen Gemischen bis auf einen Rest das Wasser entzogen wird, das in Kläranlagen gereinigt und dem Wassernetz wieder zugeführt wird.

Die eingedickten Rückstände werden dann in Müllverbrennungsanlagen für Sondermüll verbrannt, wobei Umweltbelastungen zum Beispiel durch die Bildung von Dioxinen nicht ausgeschlossen werden können.

Es sind weiterhin Verfahren zum Aufbereiten kontaminierter Böden bekann (DE-PS 38 07 487), indem der kontaminierte Boden mit Wasser und mit den biologischen Abbau von Kontaminationen begünstigenden Bakterien versetzt und das Gemisch gegebenenfalls mit dispergierenden Substanzen zusätzlch versetzt und unter Erwärmen auf 250 bis 35°C gemischt wird. Zusätzlich wird Sauerstoff eingetragen und das Mischen solange fortgesetzt bis die Kontaminationen abgebaut und der aufbereitete Boden der Mischanlage entnommen.

Die Erfindung geht von dem zufällig festgestellten Effekt aus, daß beim Schütteln eines Boden-(Erdreich)-Wasser-Gemisches auf dem Spiegel des Gemisches stets eine Schicht mit Bestandteilen des Bodens aufschwimmt.

Die Ursache für die Bildung der aufschwimmenden Schicht liegt vermutlich darin, daß Boden stets einen erheblichen Anteil von Luft aufweist, wobei Luftbläschen an organischen Bestandteilen zum Beispiel Wurzelwerk, Kompostteilchen usw. haften, die dann zum Aufschwimmen der betreffenden Teilchen führen.

Untersuchungen haben zu den überraschenden Resultaten geführt, daß diese aufschwimmende, schaumartige Schicht zumindest einen Teil der Kontminationen des Bodens enthält, falls dieser mit Kontaminationen belastet ist.

Vermutlich handelt es sich hierbei um einen Effekt. von dem bei der Schwimmaufbereitung (Flotation) von Erzen Gebrauch gemacht wird.

Bei der Schwimmaufbereitung der Erze werden diese fein zerkleinert und die Mineralteilchen von der Gangart dadurch getrennt, daß aus der Trübe, die aus dem festen Aufgabegut (feinzerkleinerte Erze), Wasser mit Zusatzflüssigkeiten und Luftbläschen besteht, je nach der Zusammensetzung der Trübe bestimmte Mineralteilchen von anhaftenden Luftbläschen in den über der Trübe stehenden Schaum gehoben und mit diesem einer weiteren Behandlung zugeführt werden.

Grundlage der Flotationsverfahren sind die steuerbaren Oberflächeneigenschaften der Mineralien, da die im feingemahlenen Erz vorliegenden Mineralien teils benetzbar sind und teils wasserabstoßende Eigenschaften haben. Die wasserabstoßenden (hydrophoben) Mineralteilchen haben eine Tendenz,Luft anzulagern.

In das Feststoff- Wasser-Gemisch (die Trübe) eingebrachte feinverteilte Luft hängt sich in Form von Luftbläschen an diese Mineralteilchen und bringt sie zum Aufschwimmen. Die sich in einem Schaum auf dem Spiegel (Oberfläche) des Feststoff-Wasser-Gemisches ansammelnden hydrophoben Erzbestandteile werden dann mit einer Abstreifeinrichtung abgehoben. Die Steuerung der Oberflächeneigenschaften der Mineralteilchen erfolgt durch Zusätze von chemischen Stoffen, wobei man die Schwimmittel in Schäumer, Sammler und regelnde Schwimmittel unterteilt, mit denen das gesonderte Abscheiden der verschiedenen Mineralien erfolgt.

Der Erfinder hat die überraschende Feststellung gemacht, daß prinzipiell kontaminierte Böden aufbereitet werden können, indem Boden-Wasser-Gemische geschüttelt werden, um zumindest einen Teil der Kontaminationen mit der aufschwimmenden Schicht zu entfernen, wobei es durch Zusätze möglich ist, weitere Kontaminationen dem Gemisch zu entziehen.

Der Erfindung liegt die Aufgabe zugrunde, auf der Basis dieser überraschenden Ergebnisse ein Verfahren zum Aufbereiten kontaminierter Böden, sowie eine Vorrichtung zum Durchführen des Verfahrens zu schaffen.

Die Aufgabe, auf dieser Basis ein Verfahren zum Aufbereiten kontaminierter Böden zu schaffen, wird erfindungsgemäß dadurch gelöst, daß kontaminerter Boden und Wasser gemischt werden, die auf dem Boden-Wasser-Gemisch aufschwimmende, schaumartige und Kontaminationen enthaltende Schicht entfernt wird, der aufbereitete Boden und das gelöste bzw. suspendierte Stoffe enthaltende Wasser voneinander getrennt werden, indem das Wasser mit den in Lösung gehenden bzw. suspendierten Stoffen des Boden-Wasser-Gemisches unter Verwirbelung im Kreislauf so geführt wird, daß sich zwischen dem Boden-Wasser-Gemisch und der aufschwimmenden, schaumartigen und Kontaminationen enthaltenden Schicht eine von Boden freie Zwischenschicht bildet, in vorgegebenen Zeitintervallen die jeweils aufschwimmenden, schaumartigen und Kontaminationen enthaltenden Schichten entfernt werden bis die Lichtabsorpton der Zwischenschicht für Licht vorgegebener Wellenlänge jeweils einen konstanten Absorptionswert zeigt.

Da sich stets eine aufschwimmende, schaumartige und bei kontaminierten Böden Kontaminationen enthaltende Schicht bildet, wird das Verfahren so durch geführt, daß zunächst ohne vorherige Analyse eine aufschwimmende Schicht erzeugt, diese entfernt und dann erst Analysen auf die in dem Gemisch zurückgebliebenen Kontaminationen erfolgen. Prinzipiell können in üblicher Weise die Kontaminationen anhand chemischer Analysen bestimmt werden, indem zum Beispiel der Zwischenschicht Proben entnommen werden.

In völliger Abkehr vom bisherigen Stand der Technik kann auch eine Bestimmung der Kontaminationen mittels der Absorptionsspektralanalyse durchgeführt werden, indem die Zwischenschicht absorptionssspektralanalytisch auf charakteristische Linien bzw. Banden der Kontaminationen untersucht wird.

Dies kann automatisch mittels der gespeicherten Linien und Banden und gegebenenfalls durch Einsatz von Rechnern erfolgen, wie dies vergleichsweise bei der Materialprüfung von Legierungen mittels Quantometern erfolgt.

Gegebenenfalls ist es erforderlich, die Zwischenschicht durch Filter von Schwebeteilchen zu befreien.

In völlliger Abkehr vom bisherigen Stand der Technik erfolgen nicht vorab Analysen auf sämtliche Kontaminationen. Durch diese Maßnahmen ergibt sich eine erhebliche Zeitersparnis und Kostenersparnis.

Erfindungswesentlich ist die Ausbildung der Zwischenschicht. Solange die aufschwimmende Schicht sich ausbildet, ist visuell eine Aufhellung (Abnahme der Trübung) der Zwischenschicht bis auf einen konstanten Wert zu erkennen, wobei in vielen Fällen die Zwischenschicht visuell als klare Flüssigkeitsschicht feststellbar ist.

Die Zwischenschicht hat erfindungsgemäß die Funktion eines Sensors, indem zum Beispiel in vorgegebenem Abstand zueinander zwei Fortodioden in der Zwischenschicht im Strahlengang einer Lichtquelle angeordnet werden und der Intensitätsabfall des Lichtes auf der Strecke zwischen den beiden Dioden laufend gemessen wird, aus den Ausgangssignalen der beiden Fotodioden laufend Differenzsignal gebildet werden und bei Konstanz dieser Differenzsignale das weitere Aufbereiten abgebrochen wird, da keine weiteren Kontaminationen der aufschwimmenden Schicht mehr zugeführt werden. Erfindungsgemäß wird somit exakt die Länge des Zeitintervalles erfasst, das zum Durchführen der Dekontamination erforderlich ist, so daß gewissermaßen "Leerzeiten" vermieden werden.

Bekanntlich haben Moleküle charakteristische Absorptionslinien bzw. -banden für bestimmte Wellenlängen. Erfindungsgemäß wird deshalb in weiterer Ausgestaltung der Erfindung eine Absorptionsspektralanalyse der Zwischenschicht mit Licht verschiedener Wellenlängen durchgeführt, so daß in völliger Abkehr von den bisherigen chemischen Analyseverfahren die Kontaminationen mit der Methode der Absorptionspektralanalyse erfasst werden.

Allgemein wird somit die Zwischenschicht nicht nur zum Bestimmen der Zeitintervalle herangezogen, sondern auch zur Bestimmung der Kontaminationen, wobei selbstverständlich Voraussetzung ist, daß sie in Lösung vorliegen.

Generell wird das erfindungsgemäße Verfahren in der Weise durchgeführt, daß zunächst ohne vorherige Analyse Kontaminationen mit der aufschwimmenden schaumartigen Schicht entfernt werden, wobei das Ende dieser Verfahrensstufe durch das laufende Messen des Absorptionswertes der Zwischenschicht überwacht wird. Anschließend werden dem Gemisch entsprechende Stoffe zugesetzt, so daß weitere Kontaminationen in Lösung gehen, die dann in den weiteren Verfahrenssstufen enfernt werden.

Es ist auch ohne weiteres möglich, durch den Einsatz von Rechnern mit den oben erwähnten gespeicherten Daten automatisch das Verfahren durchzuführen und mittels Mikroprozessoren usw. die Ventile und anderen Aktoren der Vorrichtung zur Durchführung des Verfahrens zu steuern.

Erfindungsgemäß können entsprechend den durch chemische Analysen ermittelten Kontaminationen dem Wasser chemische Verbindungen zum Überführen von weiteren Kontaminationen in die aufschwimmende, schaumartige und die Kontaminationen enthaltende Schicht zugesetzt werden.

In einer weiteren Ausgestaltung der Erfindung wird bzw. werden dem Boden-Wasser-Gemisch zusätzlich zu dem im Kreislauf geführten Wasser mit den in Lösung gehenden bzw. suspendierten Kontaminationen noch Luft und/oder Dampf zugeführt, so daß ein eventuelles Defizit an Luft sicher ausgeglichen und durch den Dampf ein Erwärmen des Gemisches möglich ist, was insbesondere bei niedrigen Außentemperaturen erforderlich werden kann.

In einer noch weiteren Ausgestaltung der Erfindung wird bzw. werden dem Boden-Wasser-Gemisch zusätzlich zu dem im Kreislauf geführten Wasser mit den in Lösung gehenden bzw. suspendierten Kontaminationen noch Inertgas und/oder Dampf zugeführt. Die Verwendung von Inertgas anstelle von Luft verhindert unerwünschte Reaktionen in dem Gemisch.

Zum Erzielen von zusätzlichen chemischen Reaktionen wird bzw. werden in einer noch weiteren Ausgestaltung der Erfindung dem Boden-Wasser-Gemisch zusätzlich zu dem im Kreislauf geführten Wasser mit den in Lösung gehenden Kontaminationen noch mit mindestens einer Kontamination chemisch reagierendes Reaktionsgas und gegebenenfalls Dampf zugeführt.

Um eine höhere Löslichkeit der Kontaminationen in dem Gemisch zu erzielen, wird in einer noch weiteren Ausgestaltung der Erfindung während mindestens eines der Zeitintervalle der Spiegel des Boden-Wasser-Gemisches mit unter Druck stehendem Gas beaufschlagt.

Es kann auch erforderlich sein, nicht in Lösung gehende, in der Gasphase verbleibende Kontaminationen in der Gasphase aus dem Gemisch zu entfernen.

In einer noch weiteren Ausgestaltung der Erfindung wird während mindestens eines der Zeitintervalle oberhalb des Spiegels des Boden-Wasser-Gemisches Unterdruck erzeugt.

Erfindungsgemäß wird dann gegebenenfalls zusätzlich in weiterer Ausgestaltung der Erfindung die oberhalb des Spiegels des Boden-Wasser-Gemisches sich bildende gas- und oder dampfförmige Phase zur Aussscheidung der in die Gas- und oder Dampfform übergegangenen Kontaminationen in geschlossenem Kreislauf einer Abscheidevorrichtung für diese Kontaminationen zugeführt.

In einer noch weiteren Ausgestaltung der Erfindung wird zum Abscheiden von hochgiftigen Schwermetallen wie zum Beispiel von Cadmium ein elektrisches Gleichspannungsfeld an zwei in das Boden-Wasser-Gemisch eintauchende Elektrodenplatten gelegt.

Das Abscheiden von Quecksilber kann erfindungsgemäß so erfolgen, daß die Verwirbelung des Boden-Waser-Gemisches in Gegenwart von in das Boden-Wasser-Gemisch eintauchenden Kupfernetzen durchgeführt wird.

In einer weiteren Ausgestaltung der Erfindung werden in das Boden-Wassser-GemischUltraschallwellen eingekoppelt, so daß die Bodenteilchen zusätzlich zerkleinert werden und weiterhin eine bessere Durchmischung des Boden-Wasser-Gemsiches gegeben ist.

Die Aufgabe, eine Vorrichtung zum Durchführen des Verfahrens zu schaffen wird erfindungsgemäß dadurch gelöst, daß die Vorrichtung einen Arbeitsbehälter aufweist, der Behälterboden Düsen für die Zufuhr des im Kreislauf zu führenden Wassers hat, mit Druckluft beaufschlagbare Düsen und eine Überlaufkante zum Entfernen der aufschwimmenden, schaumartigen und Kontaminationen enthaltenden Schichten und mindestens ein Absaugrohr für Wasser hat.

Die Vorrichtung kann erfindungsgemäß einen um eine Achse in drei Stellungen verschwenkbaren Arbeitsbehälter haben, eine parallel zur Achse des Arbeitsbehälters angeordnetes und in der zweiten Arbeitsstellung des Arbeitsbehälters in der unteren Scheitellinie des Behälterinnnenwand verlaufendes Absaugrohr für Wasser und weiterhin eine Kippeinrichtung für das Verschwenken des Arbeitsbehälters in die erste, in die zweite und in die dritte Arbeitsstellung, in der der Arbeitsbehälter den aufbereiteten Boden in einen Auffangbehälter übergibt.

Die mit Druckluft beaufschlagbaren Düsen haben die Funktion eines mechanischen Abstreifers, sind praktisch nicht störanfällig und machen einen aufwendigen Antrieb und eine Zwangsführung für einen sonst erforderlichen mechanischen Abstreifer überflüssig.

Gemäß einem bevorzugten Ausführungsbeispiel hat erfindungsgemäß der Arbeitsbehälter einen rechteckigen Querschnitt, wobei das Absaugrohr entlang der vom dem Boden und der einen Seitenwand gebildeten Innenkante verläuft, die in der dritten Arbeitstellung die untere Scheitellage einnimmt. Durch diese Maßnahmen ist eine Schüttrinne gebildet, die besonders schnell das Wasser absaugen lässt.

In einer noch weiteren Ausgestaltung der Erfindung hat der Arbeitsbehälter in mindestens einer Seitenwand Absaugdüsen zum Absaugen der sich zuerst gebildeten aufschwimmenden, schaumartigen und Kontaminationen aufweisenden Schicht, so daß die erste aufschwimmende Schicht, die eine grobe Struktur hat, gesondert entfernt werden kann.

In einer weiteren Ausgestaltung der Erfindung hat der Arbeitsbehälter weitere Düsen für die Zufuhr von Luft, von Inertgas und/oder Reaktionsgas, so daß das Gemisch nach dem Prinzip der Mammutpumpe wirksam verwirbelt wird.

Um die festen Erdteilchen möglichst effektiv zu zerkleinern, hat der Arbeitsbehälter einen Schwingboden oder Ultraschallköpfe.

In einer noch weiteren Ausgestaltung der Erfindung weist der Arbeitsbehälter einen Deckel und Anschlüsse für Einrichtungen zur Erzeugung eines Über- bzw. Unterdruckes auf, für dieAbscheidung der Schwermetalle Plattenelektroden und einen Gleichspannungserzeuger und Kupfernetze für das Amalgamieren des Quecksilbers auf.

In einer noch weiteren Ausgestaltung der Erfindung hat der Arbeitsbehälter eine Einrichtung mit einer Lichtquelle, Fotodioden und einer Auswerteeinrichtung für das Bestimmen der Absorptionswerte und/oder der Kontaminationen.

Gemäß einem bevorzugten Ausführungsbeispiel hat die Vorrichtung eine Einrichtung zum Durchführen der Absorptionsspektralanalyse und einen Rechner für die Bestimmung der Kontaminationen.

Gemäß einer weiteren Ausgestaltung der Erfindung ist die Vorrichtung in ein Straßenfahrzeug integriert und der Arbeitsbehälter um eine in Längsrichtung des Straßenfahrzeuges verlaufende Achse verschwenkbar angeordnet.

Durch diese Maßnahmen ist eine mobile und zudem den Bedingungen des Straßenverkehrs angepasste Aufbereitungsanlage geschaffen, die im Gegensatz zu ortsfesten Anlagen an den Orten, an denen Böden aufzubereiten sind, insbesondere schnell an Katastrophenorten einsetzbar ist.

In einer weiteren Ausgestaltung der Erfindung werden gegen Ende des Verfahrens chemische Verbindungen zum Binden der Restkontaminationen zugesetzt, da die aufeinanderfolgenden bzw. nacheinander aufschwimmenden schaumartigen und Kontaminationen enthaltenden Schichten aufgrund der abnehmenden Konzentrationen der Kontaminationen in immer geringeren Mengen aufschwimmen, so daß es nach einer expiermintell zu bestimmenden Anzahl von Zyklen wirtschaftlicher ist in der Endphase chemische Verbindungen oder gegebenenfalls Ionenaustauscher und dergleichen einzusetzen, insbesondere dann, wenn extrem hohe Anforderungen an den Dekontaminationsprozess gestellt werden. Es hat sich gezeigt, daß in einem überraschend großen Anwendungsbereich hierfür WASTE 3400 besonders wirksam ist.

Probleme ergeben sich bekanntlich auch beim Aufbereiten von kontaminierten stehenden und kontaminierten fließenden Gewässern.

Bekanntlich weisen kontaminierte fließende und kontaminierte stehende Gewässer große Mengen an die Umwelt belastenden Stoffen auf. So sind zum Beispiel viele Flußbette, der Mündungsbereich von Flüssen, der Küstenbereich von Meeren bzw.

von Seen im Einzugsgebiet von angesiedelten Industrieanlagen mit Schwermetallverbindungen, insbesondere mit Metallen wie Quecksilber und Cadmium, weiterhin auch mit Salzen wie insbesondere Kalisalzen stark belastet, so daß sich vor allem bei der Trinkwasseraufbereitung von Uferfiltrat erhebliche Probleme ergeben, die noch nicht zufriedenstellend gelöst sind bzw. einen extrem hohen unwirtschaftlichen Aufwand erfordern.

Bei vielen Havarieunfallen auf Flüssen und Seen, sowie im Küstenbereich treiben auf der Wasseroberfläche Filme von Ölen, Treibstoffen oder Filme chemischer Verbindungen, deren Beseitigung ebenfalls noch nicht befriedigend gelöst ist. Im Prinzip werden die auf der Oberfläche schwimmenden Kontaminationen mit erheblichen Wassermengen abgepumpt und an Land entsorgt.

Der Erfindung liegt deshalb die weitere Aufgabe zugrunde, auf der Basis der oben dargelegten überraschenden Feststellung der Erfinder ein Verfahren zum Aufbereiten kontaminierter fließender oder kontaminierter stehender Gewässer zu schaffen, weiterhin die noch weitere Aufgabe, Vorrichtungen zum Durchführen dieser Verfahren zu schaffen, die auch beim Aufbereiten von kontaminierten Böden einsetzbar sind.

Die Aufgabe auf dieser Basis kontaminierte fließende und kontaminierte stehende Gewässer aufzubereiten wird erfindungsgemäß gelöst durch ein Verfahren zum Aufbereiten kontaminierter stehender oder fließender Gewässer, indem kontaminierter Boden des kontaminierten stehenden oder kontaminierten fließenden Gewässers und/oder oberhalb des Bodens des kontaminierten stehenden oder kontaminierten fließenden Gewässers befindliches kontaminiertes Wasser entnommen und unter eventuellem Zusatz von Wasser gemischt werden, die auf dem Boden-Wasser-Gemisch aufschwimmende, schaumartige und Kontaminationen enthaltende Schicht entfernt, der aufbereitete Boden und das gelöste bzw. suspendierte Stoffe enthaltende Wasser voneinander getrennt werden, das Wasser mit den in Lösung gehenden bzw. suspendierten Stoffen des Boden-Wasser-Gemisches unter Verwirbelung im Kreislauf so geführt wird, daß sich zwischen dem Boden-Wasser-Gemisch und der aufschwimmenden, schaumartigen und Kontaminationen enthaltenden Schicht eine von Boden freie Zwischenschicht bildet, in vorgegebenen Zeitintervallen die jeweils aufschwimmenden, schaumartigen und Kontaminationen enthaltenden Schichten entfernt werden bis die Lichtabsorption der Zwischenschicht für Licht vorgegebener Wellenlänge jeweils einen konstanten Absorptionswert zeigt, bzw. durch ein Verfahren zum Aufbereiten kontaminierter stehender oder fließender Gewässer, indem die auf dem stehenden oder fließenden Gewässer schwimmende(n) Schicht(en) der Kontaminationen in vorgegebener Menge entnommen und gegebenenfalls mit Wasser und/ oder falls es erforderlich ist mit mindestens einem schaumbildenden Mittel für die Kontaminationen gemischt wird (werden), das Gemisch unter Verwirbelung im Kreislauf so geführt wird, daß sich unterhalb die aufschwimmenden, schaumartigen und Kontaminationen enthaltenden Schichten jeweils eine einen geringeren Kontaminationsgehalt aufweisende Schicht bildet, in vorgegebenen Zeitintervallen die jeweils aufschwimmenden, schaumartigen und Kontaminationen enthaltenden Schichten entfernt werden bis die Lichtabsorption in der jeweils einen geringeren Kontaminationsgehalt aufweisenden Schicht für Licht vorgegebener Wellenlänge jeweils einen konstanten Absorptionswert zeigt.

In einer weiteren Ausgestaltung dieser erfindungsgemäßen Verfahren werden entsprechend der durch Absorptionsspektralanalyse der Zwischenschicht und/oder der durch chemische Analysen ermittelten Kontaminationen dem Wasser chemische Verbindungen zum Überführen von weiteren Kontaminationen in die aufschwimmenden, schaumartigen und Kontaminationen enthaltenden Schichten zugesetzt werden.

Diese Verfahren werden somit nach dem gleichen Verfahrensprinzp durchgeführt wie das Verfahren zum Aufbereiten von kontaminierten Böden.

Vorteilhafte Ausgestaltungen dieser Verfahren sind Gegenstand der Ansprüche 17 bis 29, die mit den entsprechenden Ansprüchen 1 bis 13 übereinstimmen und ebenfalls deren Vorteile aufweisen.

Die Aufgabe eine Vorrichtung zum Aufbereiten von kontaminierten Böden, kontaminierten stehenden oder kontaminierten fließenden Gewässern zu schaffen wird erfindungsgemäß nach einem zweiten Lösungsprinzip dadurch gelöst, daß die Vorrichtung einen Arbeitsbehälter aufweist, der Behälterboden Düsen für die Zufuhr des im Kreislauf zu führenden Wassers hat, mit Druckluft beaufschlagbare Düsen und eine Überlaufkante zum Entfernen der aufschwimmenden, schaumartigen und Kontaminationen enthaltenden Schichten und mindestens ein Absaugrohr für Wasser hat, sowie eine Einrichtung zum Aufbereiten des in geschlosssenem Kreislauf geführten Wassers mit den in Lösung gehenden bzw. suspendierten Stoffen und der Arbeitsbehälter eine zur Einrichtung führende Leitung und die Einrichtung eine mit dem Arbeitsbehälter verbundene weitere Leitung aufweist.

Diese Leitungen mit denen der Arbeitsbehälter und die Einrichtung zum Aufbereiten des in geschlossenem Kreislauf geführten Wassers mit den in Lösung gehenden bzw. mit den suspendierten Stoffen verbunden sind, sind stets vorhanden, auch wenn nicht besonders erwähnt oder in den Figuren der Übersicht halber nicht dargestellt sind.

Dies gilt auch für die Arbeitsbehälter bzw. funktionsgleichen Kammern der folgenden Ausführungsbeispiele auch wenn sie nicht besonders erwähnt bzw. dargestellt sind.

In einer weiteren Ausgestaltung der Erfindung ist in dem Arbeitsbehälter im Abstand zu den Wänden des Arbeitsbehälters oberhalb der Düsen eine Platte mit Durchbrüchen angeordnet.

Erfindungsgemäß sind die Durchbrüche Bohrungen, Schlitze oder Langlöcher, wobei in einer noch weiteren erfinderischen Ausgestaltung der Querschnitt der Durchbrüche auf der Anströmseite der Platte größer ist als der Querschnitt der Durchbrüche auf der Abströmseite der Platte.

Durch diese Maßnahmen wird eine besonders gute Durchmischung des zu dekontaminierenden Behälter- bzw. Kammerinhalts erreicht.

In einer noch weiteren erfindungsgemäßen Ausgestaltung weisen die Durchbrüche im Austrittsbereich eine scharfe Kante zum Zerteilen der Luftblasen auf, so daß eine noch bessere Durchmischung erzielt wird.

Gemäß einem zweiten Lösungsprinzip zum Aufbereiten von kontaminierten Böden, kontaminierten stehenden oder kontaminierten fließenden Gewässern weist der Arbeitsbehälter zwei in vorgebenem Abstand zueinander angeordnete, entlang ihrer Mantelflächen in einem streifenförmigen Bereich offene Hohlzylinderabschnitte auf, wobei die beiden entlang ihrer Mantelflächen in einem streifenförmigen Bereich offenen Hohlzylinderabschnitte mit Stirnplatten verbunden sind und mit ihnen zwei offene Kammern begrenzen, die Vorrichtung eine Einrichtung zum Aufbereiten des in geschlossenem Kreislauf geführten Wassers aufweist, die innere offene Kammer von der Einrichtung gespeiste Düsen und eine Rückflußleitung zur Einrichtung hat.

Durch diese Maßnahmen ist eine Vorrichtung geschaffen. die in beliebiger Länge ausführbar ist, wobei in der inneren offenen Kammer die Dekontamination stattfindet und nach den vorgegebenen Zeitintervallen der Behälter durch Verschwenken um seine Achse die aufschwimmenden schaumartigen und Kontaminationen enthaltenden Schichten an die äußere offene Kammer abgibt und der eine oder andere Rand der inneren offenen Kammer je nach der verschwenkten Stellung die Überlaufkante bildet.

Gemäß einer Abwandlung dieses Lösungsprinzips weist der Arbeitsbehälter zwei, in vorgegebenem Abstand zueinander angeordnete, entlang ihrer Mantelflächen in einem streifenförmigen Bereich offene Hohlprofilabschnitten von elliptischem Querschnitt auf, wobei die beiden entlang ihrer Mantelflächen in einem streifenförmigen Bereich offenen Hohlprofilabschnitte mit Stirnplatten verbunden sind und mit ihnen zwei offene Kammern begrenzen, die Vorrichtung eine Einrichtung zum Aufbereiten des in geschlossenem Kreislauf geführten Wassers aufweist, die innere offene Kammer von der Einrichtung gespeiste Düsen und eine Rückflußleitung zur Einrichtung hat.

In einer noch weiteren erfindungsgemäßen Ausgestaltung dieses Lösungsprinzips unterteilt eine in Achsenrichtung zwischen den offenen Hohlzylinderabschnitten bzw. den Hohlprofilabschnitten von elliptischem Querschnitt in ihrem unteren Scheitelbereich verlaufende Trennwand die äußere offene Kammer in zwei Teilkammern, so daß die aufeinanderfolgenden aufschwimmenden schaumartigen und Kontaminationen enthaltenden Schichten abwechselnd der einen oder anderen Kammer zugeführt und so voneinander getrennt werden können, wobei jeweils während der Fortsetzung des Verfahrens diese Kammern geleert werden.

Durch diese Maßnahmen ist eine Vorrichtung geschaffen, die in beliebiger Länge ausführbar ist, wobei in der inneren offenen Kammer erfindungsgemäß die aufschwimmenden, die Kontaminationen enthaltenden Schichten gebildet werden.

Gemäß einer erfindungsgemäßen Weiterbildung dieses Prinzips unterteilen zwei in Achsenrichtung zwischen den beiden offenen Hohlzylinderabschnitten bzw. den beiden Hohlprofilabschnitten von elliptischem Querschnitt in ihrem unteren Scheitelbereich verlaufende Trennwände die äußere offene Kammer in drei Teilkammern, wobei die mittlere Teilkammer im Bereich der inneren offenen Kammer als Düsen ausgebildete Durchbrüche aufweist, eine Leitung die innere offene Kammer und eine andere Leitung die mittlere Teilkammer mit der Einrichtung zum Aufbereiten des in geschlossenem Kreislauf geführten, die gelösten bzw. suspendierten Stoffe enthaltenden Wassers verbinden.

Durch diese Maßnahmen ist eine konstruktiv einfache und sehr wirksame Vorrichtung geschaffen.

Erfindungsgemäß kann die innere Kammer senkrecht zu ihrer Achse (ihren Achsen) Düsen aufweisen, wobei die äußere offene Kammer eine Abflußleitung hat bzw. ihre beiden äußeren Teilkammern jeweils eine Abflußleitung haben.

In einer weiteren erfindungsgemäßen Ausgestaltung dieses Lösungsprinzips ist oberhalb der Düsen im Abstand zu der Innenwandung der inneren offenen Kammer eine Platte mit Düsen angeordnet, die, wie bereit oben dargelegt, die Verwirbelung bzw. Durchmischung des zu dekontaminierenden Behälterinhalts fördert.

Zur Steigerung dieses Effektes haben erfindungsgemäß in einer weiteren Ausgestaltung die Durchbrüche im Austrittsbereich einen größeren Querschnitt als im Eintrittsbereich.

Weiterhin weist die Vorrichtung auf den Stirnplatten oder auf der äußeren Mantelfläche schwenkbar gelagerte Zapfen auf, so daß die die Dekontminationen enthaltenden aufschwimmenden Schichten ohne weiteres an die äußere Kammer bzw. die beiden Kammern bzw. äußeren Teilkammern übergeben werden können.

Die Aufgabe wird gemäß einem dritten Lösungsprinzip dadurch gelöst, daß der Arbeitsbehälter zwei, in vorgegebenem Abstand zueinander koaxial angeordnete, Hohlzylinderabschnitte aufweist, die beiden offenen Hohlzylinderabschnitte mit einer Bodenplatte verbunden sind Bodenplatte verbunden sind und mit ihr die nach oben mit einer Bodenplatte verbunden sind und mit ihr eine nach oben offene, einen äußeren Rand und einen inneren Rand aufweisende Kammer von kreisringförmigem Querschnitt begrenzen, in der Kammer in vorgegebenem Abstand ein weiterer Hohlzylinderabschnitt angeordnet und mit einer Bodenplatte unter Ausbildung einer weiteren oben offenen, einen Rand aufweisenden Kammer angeordnet ist, zwischen den Bodenplatten Distanzstücke angeordnet sind, die beiden Hohlzylinderabschnitte und die beiden Bodenplatten eine, einen Rand aufweisende Zwischenkammer begrenzen, die drei Ränder so angeordnet sind, daß der innere Rand tiefer verläuft als der äußere Rand und der mittlere Rand tiefer verläuft als der innere Rand, die Vorrichtung eine Einrichtung zum Aufbereiten des in geschlossenem Kreislauf geführten die gelösten Stoffe bzw. suspendierten Stoffe enthaltenden Wassers aufweist, die innere nach oben offene Kammer von der Einrichtung gespeiste Düsen und eine Rückflußleitung zur Einrichtung hat, die mittlere Kammer wahlweise mit einer Abflußleitung oder mit der Einrichtung zum Aufbereiten des in geschlossenem Kreislauf geführten Wassers verbindbar ist und die äußere Kammer eine Abflußleitung mit einer Pumpe hat.

Durch diese Maßnahmen wird erreicht, daß durch Fluten der mittleren nach oben offenen Kammer bis zu ihrem äußeren Rand die kontaminierten aufschwimmenden Schichten an die äußere nach oben offene Kammer abgegeben werden können bzw. bei wechselweise Entleeren und Fluten der mittleren nach oben offenen Kammer die aufschwimmenden, Kontaminationen enthaltenden Schichten voneinander getrennt werden können.

In einer weiteren erfindungsgemäßen Ausgestaltung weist der Arbeitsbehälter bzw. die Kammer ein Rohr mit Durchbrüchen auf und ist über ein Mehrwegeventil mit der Einrichtung zum Aufbereiten des in geschlossenem Kreislauf geführten Wassers mit den gelösten bzw. suspendierten Stoffen verbindbar. Sobald das Rohr mit der Einrichtung verbunden ist, wird die Verwirbelung in der Arbeitskammer bzw. in der inneren Kammer noch gesteigert.

Gemäß einer Abwandlung dieses Lösungsprinzips weist die Vorrichtung zwei in vorgegebenem Abstand zueinander angeordnete Hohlprofilabschnitte von zylindrischem oder von elliptischem Querschnitt auf, wobei die beiden Hohlprofilabschnitte unter Ausbildung von zwei nach oben offenen Kammern mit einer Bodenplatte verbunden sind, in der inneren Kammer ein doppelwandiger hohlzylindrischer Körper angeordnet ist, die beiden hohlzylindrischen Abschnitte mit kreisringförmigen Stirnplatten unter Ausbildung einer Kammer von kreisringförmigen Querschnitt verbunden sind, die beiden hohlzylindrischen Abschnitte Durchbrüche aufweisen, die Vorrichtung eine Einrichtung zum Aufbereiten des in geschlossenem Kreislauf geführten führten Wassers aufweist, eine Leitung die innere nach oben offen Kammer und eine weitere Leitung die Kammer von kreisringförmigem Querschnitt mit der Einrichtung verbindet.

In einer Abwandlung dieses Lösungsprinzips weist erfindungsgemäß die Vorrichtung einen Hohlprofilabschnitt von zylindrischem bzw. von elliptischem Querschnitt auf, wobei der Hohlprofilabschnitt von zylindrischem bzw. elliptischem Querschnitt unter Ausbildung einer nach oben offenen Kammer mit einer Bodenplatte verbunden ist, in der nach oben offenen Kammer mindestens ein doppelwandiger Körper aus zwei zueinander distanziert angeordneten Hohlzylinderabschnitten bzw. Rechteckprofilabschnitten angeordnet ist, die beiden Hohlzylinderabschnitte bzw. Rechteckprofilabschnitte mit kreisringförmigen bzw. rahmenförmigen Stirnplatten unter Ausbildung einer in sich geschlossenen Kammer von kreisringförmigem bzw. rahmenartigen rechteckigem rahmenartigen Querschnitt verbunden sind, die beiden Hohlzylinderabschnitte bzw. Rechteckprofilabschnitte Durchbrüche aufweisen, die Vorrichtung eine Einrichtung zum Aufbereiten des in geschlossenem Kreislauf geführten Wassers mit denb in Lösung gehenden bzw. suspendierten Stoffen aufweist, eine Leitung die nach oben offen Kammer und eine weitere Leitung die in sich geschlossene Kammer mit der Einrichtung verbindet.

Gemäß einer vereinfachten Ausführung dieses vierten Lösungsprinzips weist die Vorrichtung einen zylindrischen Hohlprofilabschnitt bzw. einen hohlen Rechteckprofilabschnitt auf, wobei der zylindrische Hohlprofilabschnitt bzw. der hohle Rechteckprofilabschnitt unter Ausbildung einer nach oben offenen Kammer mit einer Bodenplatte verbunden ist, in der nach oben offenen Kammer ein doppelwandiger Körper aus zwei zueinander distanziert angeordneten Hohlzylinderabschnitten bzw. ein doppelwandiger aus zwei zueinander distanziert angeordneten hohlen Rechteckprofilabschnitten angeordnet ist, die beiden Hohlzylinderabschnitte bzw. die beiden hohlen Rechteckprofilabschnitte mit kreisringförmigen Stirnplatten bzw. rahmenartigen Stirnplatten unter Ausbildung einer Kammer von kreisringförmigem bzw. rahmenartigen Querschnitt verbunden sind, die beiden Hohlzylinderabschnitte bzw. die beiden hohlen Rechteckprofile Durchbrüche aufweisen, die Vorrichtung eine Einrichtung zum Aufbereiten des in geschlossenem Kreislauf geführten Wassers mit den in Lösung gehenden bzw. suspendierten Stoffen aufweist, eine Leitung die nach oben offen Kammer und eine weitere Leitung die Kammer von kreisringförmigem bzw. rahmenartigen Querschnitt mit der Einrichtung verbindet.

Durch diese Maßnahmen ist eine sehr kompakte Vorrichtung geschaffen.

In einer vorteilhaften erfindungsgemäßen Weiterbildung ist ein Rohr mit Durchbrüchen durch die nach oben offene Kammer und den Körper hindurchgeführt, wobei das Rohr bzw. das Rohr und die nach oben offene Kammer jeweils einen Anschluß für die Zufuhr von im Kreislauf geführtem gelöste bzw. suspendierte Stoffe enthaltendem Wasser und/oder einen Anschluß für Dampf bzw. Wasser und/oder einen Anschluß für eine Einrichtung zum Aufbereiten des in geschlossenem Kreislauf geführten Wassers hat.

Durch diese Maßnahmen ist eine sehr kompakte und sehr effektive Vorrichtung geschaffen.

In einer weiteren Ausgestaltung dieses Ausführungbeispiels ist an dem runden Hohlprofilabschnitt bzw. dem Hohlprofilabschnitt von rechteckigem Querschnitt und an der Bodenplatte jeweils ein pneumatischer bzw. hydraulischer Arbeitszylinder zum Verschwenken der Vorichtung in eine geneigte Stellung zur Entnahme des Bodens angelenkt sind, der in der Entnahmestellung untere Bereich des nach oben offenen Behälters unterhalb des Düsen aufweisenden Rohres eine bis zum unteren Rand reichende und durch eine Klappe verschließbare Entnahmeöffnung hat.

Durch diese Maßnahmen ergibt sich eine konstruktiv einfache und kompakte Ausbildung der Vorichtung.

In einer weiteren Ausgestaltung der Erfindung nach dem ersten, zweiten, dritten oder vierten erfindungsgemäßen Lösungsprinzip und ihren weiteren erfindungsgemäßen vorteilhaften Ausgestaltungen weist der Arbeitsbehälter bzw. die entsprechende Kammer einen Schwingboden oder Ultraschallköpfe und /oder einen Deckel mit Anschlüssen ür Einrichtungen zur Erzeugung eines Über- bzw. Unterdruckes und/oder Plattenelektroden und einen Gleichspannungserzeuger für die Abscheidung der Schwermetalle und/oder eine Einrichtung mit einer Lichtquelle, Fotodioden und einer Auswerteeinrichtung für das Bestimmen der Absorptionswerte und/oder eine Einrichtung zum Durchführen der Absorptionsspektralanalyse und/oder einen Rechner für die Bestimmung der Kontaminationen und/oder Kpfernetze für das Amalgamieren des Quecksilbers auf.

Gemäß einer vorteilhaften Anwendung ist eine bzw. sind mehrere die eine Vorrichtung oder mehrere auf einem Schiff angeordnet ist, wobei in einer weiteren erfindungsgemäßen Weiterbildung die Vorrichtung bzw. Vorrichtungen mit Transportmitteln wie Hubschrauber oder dergleichen vom Schiff aus zum Einsatz in Uferzonen und/oder in Küstenbereiche bringbar ist bzw. sind. Durch diese Maßnahmen ist es möglich, die erfindungsgemäßen Vorrichtungen in beliebigen Abmessungen herzustelen, da eine Einschränkung durch die Straßenverkehrsordnung nicht mehr besteht wie dies beim Einsatz auf Straßenfahrzeugen derFall ist.

Erfindungsgemäß kann auch der Deckel des Behälters Leitungen mit Düsen zum Absaugen der aufschwimmenden Schicht und der Zwischenschicht haben.

In einer weiteren Ausgestaltung der Erfindung werden gegen Ende des Verfahrens chemische Verbindungen zum Binden der Restkontaminationen zugesetzt, da die aufeinanderfolgenden bzw. nacheinander aufschwimmenden schaumartigen und Kontaminationen enthaltenden Schichten aufgrund der abnehmenden Konzentrationen der Kontaminationen in immer geringeren Mengen aufschwimmen, so daß es nach einer expiermintell zu bestimmenden Anzahl von Zyklen wirtschaftlicher ist in der Endphase chemische Verbindungen oder gegebenenfalls Ionenaustauscher und dergleichen einzusetzen, insbesondere dann, wenn extrem hohe Anforderungen an den Dekontaminationsprozess gestellt werden. Es hat sich gezeigt, daß in einem überraschend großen Anwendungsbereich hierfür WASTE 3400 besonders wirksam ist. Probleme ergeben sich bekanntlich auch beim Aufbereiten von kontaminierten stehenden und fließenden Gewässern.

Bekanntlich weisen kontaminierte fließende und kontaminierte stehende Gewässer große Mengen an die Umwelt belastenden Stoffen auf. So sind zum Beispiel viele Flußbette, der Mündungsbereich von Flüssen, der Küstenbereich von Meeren bzw. von Seen im Einzugsgebiet von angesiedelten Industrieanlagen mit Schwermetallverbindungen, insbesondere mit Metallen wie Quecksilber und Cadmium, weiterhin auch mit Salzen wie insbesondere Kalisalzen stark belastet, so daß sich vor allem bei der Trinkwasseraufbereitung von Uferfiltrat erhebliche Probleme ergeben, die noch nicht zufriedenstellend gelöst sind bzw. einen extrem hohen unwirtschaftlichen Aufwand erfordern.

Bei vielen Havarieunfallen auf Flüssen und Seen, sowie im Küstenbereich treiben auf der Wasseroberfläche Filme von Ölen, Treibstoffen oder Filme chemischer Verbindungen, deren Beseitigung ebenfalls noch nicht befriedigend gelöst ist. Im Prinzip werden die auf der Oberfläche schwimmenden Kontaminationen mit erheblichen Wassermengen abgepumpt und an Land entsorgt.

Der Erfindung liegt deshalb die weitere Aufgabe zugrunde, auf der Basis der oben dargelegten überraschenden Feststellung der Erfinder ein Verfahren zum Aufbereiten kontaminierter fließender oder kontaminierter stehender Gewässer zu schaffen, weiterhin die noch weitere Aufgabe, Vorrichtungen zum Durchführen dieser Verfahren zu schaffen, die auch beim Aufbereiten von kontaminierten Böden einsetzbar sind.

Die Aufgabe auf dieser Basis kontaminierte fließende und kontaminierte stehende Gewässer aufzubereiten wird erfindungsgemäß gelöst durch ein Verfahren zum Aufbereiten kontaminierter stehender oder fließender Gewässer, indem kontaminierter Boden des kontaminierten stehenden oder kontaminierten fließenden Gewässers und/oder oberhalb des Bodens des kontaminierten stehenden oder kontaminierten fließenden Gewässers befindliches kontaminiertes Wasser entnommen und unter eventuellem Zusatz von Wasser gemischt werden, die auf dem Boden-Wasser-Gemisch aufschwimmende, schaumartige und Kontaminationen enthaltende Schicht entfernt, der aufbereitete Boden und das gelöste bzw. suspendierte Stoffe enthaltende Wasser voneinander getrennt werden, das Wasser mit den in Lösung gehenden bzw. suspendierten Stoffen des Boden-Wasser-Gemisches unter Verwirbelung im Kreislauf so geführt wird, daß sich zwischen dem Boden-Wasser-Gemisch und der aufschwimmenden, schaumartigen und Kontaminationen enthaltenden Schicht eine von Boden freie Zwischenschicht bildet, in vorgegebenen Zeitintervallen die jeweils aufschwimmenden, schaumartigen und Kontaminationen enthaltenden Schichten entfernt werden bis die Lichtabsorption der Zwischenschicht für Licht vorgegebener Wellenlänge jeweils einen konstanten Absorptionswert zeigt, bzw. durch ein Verfahren zum Aufbereiten kontaminierter stehender oder fließender Gewässer, indem die auf dem stehenden oder fließenden Gewässer schwimmende(n) Schicht(en) der Kontaminationen in vorgegebener Menge entnommen und gegebenenfalls mit Wasser und/ oder falls es erforderlich ist mit mindestens einem schaumbildenden Mittel für die Kontaminationen gemischt wird (werden), das Gemisch unter Verwirbelung im Kreislauf so geführt wird, daß sich unterhalb die aufschwimmenden, schaumartigen und Kontaminationen enthaltenden Schichten jeweils eine einen geringeren Kontaminationsgehalt aufweisende Schicht bildet, in vorgegebenen Zeitintervallen die jeweils aufschwimmenden, schaumartigen und Kontaminationen enthaltenden Schichten entfernt werden bis die Lichtabsorption in der jeweils einen geringeren Kontaminationsgehalt aufweisenden Schicht für Licht vorgegebener Wellenlänge jeweils einen konstanten Absorptionswert zeigt.

In einer weiteren Ausgestaltung dieser erfindungsgemäßen Verfahren werden entsprechend der durch Absorptionsspektralanalyse der Zwischenschicht und/oder der durch chemische Analysen ermittelten Kontaminationen dem Wasser chemische Verbindungen zum Überführen von weiteren Kontaminationen in die aufschwimmenden, schaumartigen und Kontaminationen enthaltenden Schichten zugesetzt werden.

Diese Verfahren werden somit nach dem gleichen Verfahrensprinzp durchgeführt wie das Verfahren zum Aufbereiten von kontaminierten Böden.

Vorteilhafte Ausgestaltungen dieser Verfahren sind Gegenstand der Ansprüche 17 bis 29, die mit den entsprechenden Ansprüchen 1 bis 13 übereinstimmen und ebenfalls deren Vorteile aufweisen.

Die Aufgabe eine Vorrichtung zum Aufbereiten von kontaminierten Böden, kontaminierten stehenden oder kontaminierten fließenden Gewässern zu schaffen wird erfindungsgemäß nach einem zweiten Lösungsprinzip dadurch gelöst, daß die Vorrichtung einen Arbeitsbehälter aufweist, der Behälterboden Düsen für die Zufuhr des im Kreislauf zu führenden Wassers hat, mit Druckluft beaufschlagbare Düsen und eine Überlaufkante zum Entfernen der aufschwimmenden, schaumartigen und Kontaminationen enthaltenden Schichten und mindestens ein Absaugrohr für Wasser hat, sowie eine Einrichtung zum Aufbereiten des in geschlossenem Kreislauf geführten Wassers mit den in Lösung gehenden bzw. suspendierten Stoffen und der Arbeitsbehälter eine zur Einrichtung führende Leitung und die Einrichtung eine mit dem Arbeitsbehälter verbundene weitere Leitung aufweist.

Diese Leitungen mit denen der Arbeitsbehälter und die Einrichtung zum Aufbereiten des in geschlossenem Kreislauf geführten Wassers mit den in Lösung gehenden bzw. mit den suspendierten Stoffen verbunden sind, sind stets vorhanden, auch wenn nicht besonders erwähnt oder in den Figuren der Übersicht halber nicht dargestellt sind.

Dies gilt auch für die Arbeitsbehälter bzw. funktionsgleichen Kammern der folgenden Ausführungsbeispiele auch wenn sie nicht besonders erwähnt bzw. dargestellt sind.

In einer weiteren Ausgestaltung der Erfindung ist in dem Arbeitsbehälter im Abstand zu den Wänden des Arbeitsbehälters oberhalb der Düsen eine Platte mit Durchbrüchen angeordnet.

Erfindungsgemäß sind die Durchbrüche Bohrungen, Schlitze oder Langlöcher, wobei in einer noch weiteren erfinderischen Ausgestaltung der Querschnitt der Durchbrüche auf der Anströmseite der Platte größer ist als der Querschnitt der Durchbrüche auf der Abströmseite der Platte.

Durch diese Maßnahmen wird eine besonders gute Durchmischung des zu dekontaminierenden Behälter- bzw. Kammerinhalts erreicht.

In einer noch weiteren erfindungsgemäßen Ausgestaltung weisen die Durchbrüche im Austrittsbereich eine schaffe Kante zum Zerteilen der Luftblasen auf, so daß eine noch bessere Durchmischung erzielt wird.

Gemäß einem zweiten Lösungsprinzip zum Aufbereiten von kontaminierten Böden, kontaminierten stehenden oder kontaminierten fließenden Gewässern weist der Arbeitsbehälter zwei in vorgegebenem Abstand zueinander angeordnete, entlang ihrer Mantelflächen in einem streifenförmigen Bereich offene Hohlzylinderabschnitte auf, wobei die beiden entlang ihrer Mantelflächen in einem streifenförmigen Bereich offenen Hohlzylinderabschnitte mit Stirnplatten verbunden sind und mit ihnen zwei offene Kammern begrenzen, die Vorrichtung eine Einrichtung zum Aufbereiten des in geschlossenem Kreislauf geführten Wassers aufweist, die innere offene Kammer von der Einrichtung gespeiste Düsen und eine Rückflußleitung zur Einrichtung hat.

Durch diese Maßnahmen ist eine Vorrichtung geschaffen. die in beliebiger Länge ausführbar ist, wobei in der inneren offenen Kammer die Dekontamination stattfindet und nach den vorgegebenen Zeitintervallen der Behälter durch Verschwenken um seine Achse die aufschwimmenden schaumartigen und Kontaminationen enthaltenden Schichten an die äußere offene Kammer abgibt und der eine oder andere Rand der inneren offenen Kammer je nach der verschwenkten Stellung die Überlaufkante bildet.

Gemäß einer Abwandlung dieses Lösungsprinzips weist der Arbeitsbehälter zwei, in vorgegebenem Abstand zueinander angeordnete, entlang ihrer Mantelflächen in einem streifenförmigen Bereich offene Hohlprofilabschnitten von elliptischem Querschnitt auf, wobei die beiden entlang ihrer Mantelflächen in einem streifenförmigen Bereich offenen Hohlprofilabschnitte mit Stirnplatten verbunden sind und mit ihnen zwei offene Kammern begrenzen, die Vorrichtung eine Einrichtung zum Aufbereiten des in geschlossenem Kreislauf geführten Wassers aufweist, die innere offene Kammer von der Einrichtung gespeiste Düsen und eine Rückflußleitung zur Einrichtung hat.

In einer noch weiteren erfindungsgemäßen Ausgestaltung dieses Lösungsprinzips unterteilt eine in Achsenrichtung zwischen den offenen Hohlzylinderabschnitten bzw. den Hohlprofilabschnitten von elliptischem Querschnitt in ihrem unteren Scheitelbereich verlaufende Trennwand die äußere offene Kammer in zwei Teilkammern, so daß die aufeinanderfolgenden aufschwimmenden schaumartigen und Kontaminationen enthaltenden Schichten abwechselnd der einen oder anderen Kammer zugeführt und so voneinander getrennt werden können, wobei jeweils während der Fortsetzung des Verfahrens diese Kammern geleert werden.

Durch diese Maßnahmen ist eine Vorrichtung geschaffen, die in beliebiger Länge ausführbar ist, wobei in der inneren offenen Kammer erfindungsgemäß die aufschwimmenden, die Kontaminationen enthaltenden Schichten gebildet werden.

Gemäß einer erfindungsgemäßen Weiterbildung dieses Prinzips unterteilen zwei in Achsenrichtung zwischen den beiden offenen Hohlzylinderabschnitten bzw. den beiden Hohlprofilabschnitten von elliptischem Querschnitt in ihrem unteren Scheitelbereich verlaufende Trennwände die äußere offene Kammer in drei Teilkammern, wobei die mittlere Teilkammer im Bereich der inneren offenen Kammer als Düsen ausgebildete Durchbrüche aufweist, eine Leitung die innere offene Kammer und eine andere Leitung die mittlere Teilkammer mit der Einrichtung zum Aufbereiten des in geschlossenem Kreislauf geführten, die gelösten bzw. suspendierten Stoffe enthaltenden Wassers verbinden.

Durch diese Maßnahmen ist eine konstruktiv einfache und sehr wirksame Vorrichtung geschaffen.

Erfindungsgemäß kann die innere Kammer senkrecht zu ihrer Achse (ihren Achsen) Düsen aufweisen, wobei die äußere offene Kammer eine Abflußleitung hat bzw. ihre beiden äußeren Teilkammern jeweils eine Abflußleitung haben.

In einer weiteren erfindungsgemäßen Ausgestaltung dieses Lösungsprinzips ist oberhalb der Düsen im Abstand zu der Innenwandung der inneren offenen Kammer eine Platte mit Düsen angeordnet, die, wie bereit oben dargelegt, die Verwirbelung bzw. Durchmischung des zu dekontaminierenden Behälterinhalts fördert.

Zur Steigerung dieses Effektes haben erfindungsgemäß in einer weiteren Ausgestaltung die Durchbrüche im Austrittsbereich einen größeren Querschnitt als im Eintrittsbereich.

Weiterhin weist die Vorrichtung auf den Stirnplatten oder auf der äußeren Mantelfläche schwenkbar gelagerte Zapfen auf, so daß die die die Dekontminationen enthaltenden aufschwimmenden Schichten ohne weiteres an die äußere Kammer bzw. die beiden Kammern bzw. äußeren Teilkammern übergeben werden können.

Die Aufgabe wird gemäß einem dritten Lösungsprinzip dadurch gelöst, daß der Arbeitsbehälter zwei, in vorgegebenem Abstand zueinander koaxial angeordnete, Hohlzylinderabschnitte aufweist, die beiden offenen Hohlzylinderabschnitte mit einer Bodenplatte verbunden sind Bodenplatte verbunden sind und mit ihr die nach oben mit einer Bodenplatte verbunden sind und mit ihr eine nach oben offene, einen äußeren Rand und einen inneren Rand aufweisende Kammer von kreisringförmigem Querschnitt begrenzen, in der Kammer in vorgegebenem Abstand ein weiterer Hohlzylinderabschnitt angeordnet und mit einer Bodenplatte unter Ausbildung einer weiteren oben offenen, einen Rand aufweisenden Kammer angeordnet ist, zwischen den Bodenplatten Distanzstücke angeordnet sind, die beiden Hohlzylinderabschnitte und die beiden Bodenplatten eine, einen Rand aufweisende Zwischenkammer begrenzen, die drei Ränder so angeordnet sind, daß der innere Rand tiefer verläuft als der äußere Rand und der mittlere Rand tiefer verläuft als der innere Rand, die Vorrichtung eine Einrichtung zum Aufbereiten des in geschlossenem Kreislauf geführten die gelösten Stoffe bzw. suspendierten Stoffe enthaltenden Wassers aufweist, die innere nach oben offene Kammer von der Einrichtung gespeiste Düsen und eine Rückflußleitung zur Einrichtung hat, die mittlere Kammer wahlweise mit einer Abflußleitung oder mit der Einrichtung zum Aufbereiten des in geschlossenem Kreislauf geführten Wassers verbindbar ist und die äußere Kammer eine Abflußleitung mit einer Pumpe hat.

Durch diese Maßnahmen wird erreicht, daß durch Fluten der mittleren nach oben offenen Kammer bis zu ihrem äußeren Rand die kontaminierten aufschwimmenden Schichten an die äußere nach oben offene Kammer abgegeben werden können bzw. bei wechselweise Entleeren und Fluten der mittleren nach oben offenen Kammer die aufschwimmenden, Kontaminationen enthaltenden Schichten voneinander getrennt werden können.

In einer weiteren erfindungsgemäßen Ausgestaltung weist der Arbeitsbehälter bzw. die Kammer ein Rohr mit Durchbrüchen auf und ist über ein Mehrwegeventil mit der Einrichtung zum Aufbereiten des in geschlossenem Kreislauf geführten Wassers mit den gelösten bzw. suspendierten Stoffen verbindbar. Sobald das Rohr mit der Einrichtung verbunden ist, wird die Verwirbelung in der Arbeitskammer bzw. in der inneren Kammer noch gesteigert.

Gemäß einer Abwandlung dieses Lösungsprinzips weist die Vorrichtung zwei in vorgegebenem Abstand zueinander angeordnete Hohlprofilabschnitte von zylindrischem oder von elliptischem Querschnitt auf, wobei die beiden Hohlprofilabschnitte unter Ausbildung von zwei nach oben offenen Kammern mit einer Bodenplatte verbunden sind, in der inneren Kammer ein doppelwandiger hohlzylindrischer Körper angeordnet ist, die beiden hohlzylindrischen Abschnitte mit kreisringförmigen Stirnplatten unter Ausbildung einer Kammer von kreisringförmigen Querschnitt verbunden sind, die beiden hohlzylindrischen Abschnitte Durchbrüche aufweisen, die Vorrichtung eine Einrichtung zum Aufbereiten des in geschlossenem Kreislauf geführten führten Wassers aufweist, eine Leitung die innere nach oben offen Kammer und eine weitere Leitung die Kammer von kreisringförmigem Querschnitt mit der Einrichtung verbindet.

In einer Abwandlung dieses Lösungsprinzips weist erfindungsgemäß die Vorrichtung einen Hohlprofilabschnitt von zylindrischem bzw. von elliptischem Querschnitt auf, wobei der Hohlprofilabschnitt von zylindrischem bzw. elliptischem Querschnitt unter Ausbildung einer nach oben offenen Kammer mit einer Bodenplatte verbunden ist, in der nach oben offenen Kammer mindestens ein doppelwandiger Körper aus zwei zueinander distanziert angeordneten Hohlzylinderabschnitten bzw. Rechteckprofilabschnitten angeordnet ist, die beiden Hohlzylinderabschnitte bzw. Rechteckprofilabschnitte mit kreisringförmigen bzw. rahmenförmigen Stirnplatten unter Ausbildung einer in sich geschlossenen Kammer von kreisringförmigem bzw. rahmenartigen rechteckigem rahmenartigen Querschnitt verbunden sind, die beiden Hohlinderabschnitte bzw. Rechteckprofilabschnitte Durchbrüche aufweisen, die Vorrichtung eine Einrichtung zum Aufbereiten des in geschlossenem Kreislauf geführten Wassers mit denb in Lösung gehenden bzw. suspendierten Stoffen aufweist, eine Leitung die nach oben offen Kammer und eine weitere Leitung die in sich geschlossene Kammer mit der Einrichtung verbindet.

Gemäß einer vereinfchten Ausführung dieses vierten Lösungsprinzips weist die Vorrichtung einen zylindrischen Hohlprofilabschnitt bzw. einen hohlen Rechteckprofilabschnitt auf, wobei der zylindrische Hohlprofilabschnitt bzw. der hohle Rechteckprofilabschnitt unter Ausbildung einer nach oben offenen Kammer mit einer Bodenplatte verbunden ist, in der nach oben offenen Kammer ein doppelwandiger Körper aus zwei zueinander distanziert angeordneten Hohlzylinderabschnitten bzw. ein doppelwandiger aus zwei zueinander distanziert angeordneten hohlen Rechteckprofilabschnitten angeordnet ist, die beiden Hohlzylinderabschnitte bzw. die beiden hohlen Rechteckprofilabschnitte mit kreisringförmigen Stirnplatten bzw. rahmenartigen Stirnplatten unter Ausbildung einer Kammer von kreisringförmigem bzw. rahmenartigen Querschnitt verbunden sind, die beiden Hohlzylinderabschnitte bzw. die beiden hohlen Rechteckprofile Durchbrüche aufweisen, die Vorrichtung eine Einrichtung zum Aufbereiten des in geschlossenem Kreislauf geführten Wassers mit den in Lösung gehenden bzw. suspendierten Stoffen aufweist, eine Leitung die nach oben offen Kammer und eine weitere Leitung die Kammer von kreisringförmigem bzw. rahmenartigen Querschnitt mit der Einrichtung verbindet.

Durch diese Maßnahmen ist eine sehr kompakte Vorrichtung geschaffen.

In einer vorteilhaften erfindungsgemäßen Weiterbildung ist ein Rohr mit Durchbrüchen durch die nach oben offene Kammer und den Körper hindurchgeführt, wobei das Rohr bzw. das Rohr und die nach oben offene Kammer jeweils einen Anschluß für die Zufuhr von im Kreislauf geführtem gelöste bzw. suspendierte Stoffe enthaltendem Wasser und/oder einen Anschluß für Dampf bzw. Wasser und/oder einen Anschluß für eine Einrichtung zum Aufbereiten des in geschlossenem Kreislauf geführten Wassers hat.

Durch diese Maßnahmen ist eine sehr kompakte und sehr effektive Vorrichtung geschaffen.

In einer weiteren Ausgestaltung dieses Ausführungbeispiels ist an dem runden Hohlprofilabschnitt bzw. dem Hohlprofilabschnitt von rechteckigem Querschnitt und an der Bodenplatte jeweils ein pneumatischer bzw. hydraulischer Arbeitszylinder zum Verschwenken der Vorichtung in eine geneigte Stellung zur Entnahme des Bodens angelenkt sind, der in der Entnahmestellung untere Bereich des nach oben offenen Behälters unterhalb des Düsen aufweisenden Rohres eine bis zum unteren Rand reichende und durch eine Klappe verschließbare Entnahmeöffnung hat.

Durch diese Maßnahmen ergibt sich eine konstruktiv einfache und kompakte Ausbildung der Vorrichtung.

In einer weiteren Ausgestaltung der Erfindung nach dem ersten, zweiten, dritten oder vierten erfindungsgemäßen Lösungsprinzip und ihren weiteren erfindungsgemäßen vorteilhaften Ausgestaltungen weist der Arbeitsbehälter bzw. die entsprechende Kammer einen Schwingboden oder Ultraschallköpfe und /oder einen Deckel mit Anschlüssen ür Einrichtungen zur Erzeugung eines Über- bzw. Unterdruckes und/oder Plattenelektroden und einen Gleichspannungserzeuger für die Abscheidung der Schwermetalle und/oder eine Einrichtung mit einer Lichtquelle, Fotodioden und einer Auswerteeinrichtung für das Bestimmen der Absorptionswerte und/oder eine Einrichtung zum Durchführen der Absorptionsspektralanalyse und/oder einen Rechner für die Bestimmung der Kontaminationen und/oder Kpfernetze für das Amalgamieren des Quecksilbers auf.

Gemäß einer vorteilhaften Anwendung ist eine bzw. sind mehrere die eine Vorrichtung oder mehrere auf einem Schiff angeordnet ist, wobei in einer weiteren erfindungsgemäßen Weiterbildung die Vorrichtung bzw. Vorrichtungen mit Transportmitteln wie Hubschrauber oder dergleichen vom Schiff aus zum Einsatz in Uferzonen und/oder in Küstenbereiche bringbar ist bzw. sind. Durch diese Maßnahmen ist es möglich, die erfindungsgemäßen Vorrichtungen in beliebigen Abmessungen herzustelen, da eine Einschränkung durch die Straßenverkehrsordnung nicht mehr besteht wie dies beim Einsatz auf Straßenfahrzeugen derFall ist.

Die Erfindung ist in der Zeichnung anhand von Ausführungsbeispielen erläutert.

Es zeigen:

Figur 1

in Seitenansicht eine Straßenfahrzeug mit einer erfindungsgemäßen Vorrichtung,

Figur 2

einen Längsschnitt durch den Arbeitsbehälter in Fahrtrichtung,

Figur 3

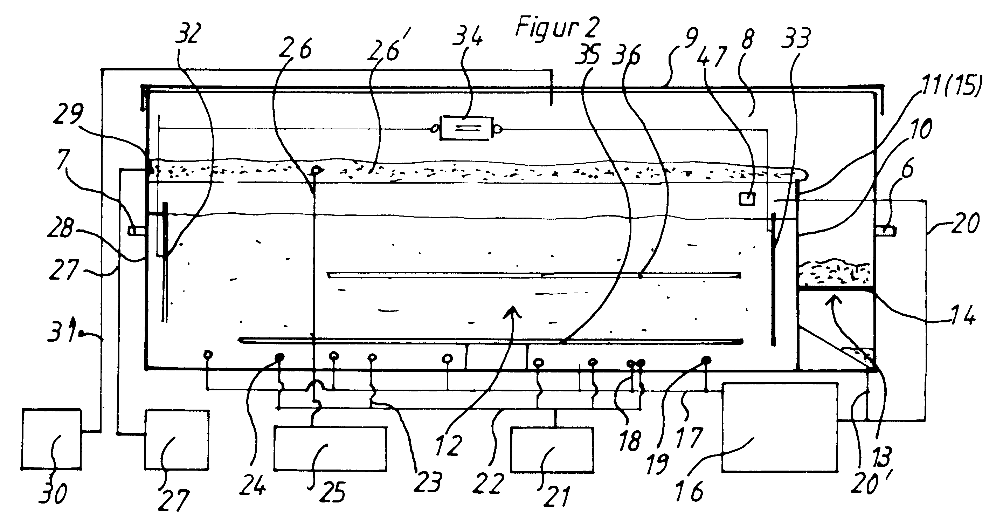

einen Schnitt senkrecht zur Zeichenebene in Figur 2,

Figur 4

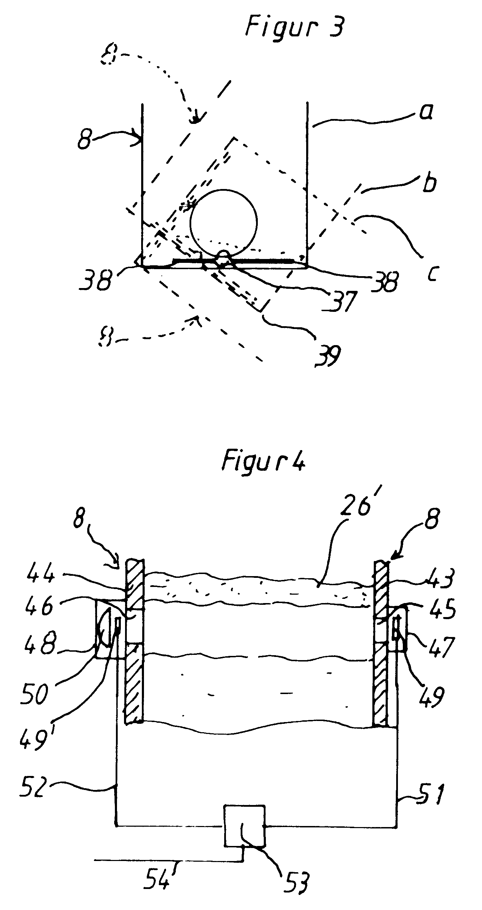

im Schnitt der Figur 3 einen Ausschnitt des Arbeitsbehälters mit der schematisch dargestellten Einrichtung zur Überwachung bzw. Steuerung der Bodensanierung und die

Figuren 5a bis 16

weitere Ausführungsbeispiele und Einzelheiten.

In den Figuren sind gleiche Teile mit gleichen Bezugszeichen bezeichnet.

Die Figur 1 zeigt in einer Seitenansicht eine als Straßenfahrzeug ausgebildete Vorrichtung 1 zum Aufbereiten kontaminierter Böden, wobei hinter dem Fahrerhaus auf einem Chassis 2 eines Lastzuges zwei Ständer 3 und 5 angeordnet sind.

Die Ständer weisen jeweils ein Lager auf für die Zapfen 6 bzw. 7 des in Fahrtrichtung des Lastzuges in drei Arbeitsstellunghen verschwenkbaren und als Druckbehälter ausgebildeten Arbeitsbehälters 8, der einen Deckel 9 hat.

Die Figur 2 zeigt einen in der Zeichenebene der Figur 1 durch die Zapfen verlaufenden Schnitt durch den Arbeitsbehälter 8, wobei die Düsen, Leitungen und die erforderlichen Einrichtungen nach Art eines Blockschaltbildes dargestellt sind.

Der Behälter weist im hinteren vom Fahrerhaus entlegenen Bereich senkrecht zur Zeichenebene eine im Abstand zum Deckel endende Querwand 10 auf, deren obere Kante 11 eine Überlaufkante 15 bildet und die den Behälter in zwei Räume 12 und 13 unterteilt.

Der vordere Raum 12 nimmt Boden-Wasser-Gemisch auf, während der hintere Raum 13 in etwa halber Höhe einen gelochten Zwischenboden 14 aufweist. Auf ihn gelangen über die Überlaufkante 15 die aufschwimmenden Kontaminationen enthaltenden Schichten, die über den gelochten Zwischenboden Wasser bzw. ihre Flüssigkeit zum Großteil abgeben, das (die) über die Leitung 20, der Einrichtung 16 zur Aufbereitung des Wassers zugeführt wird.

Unterhalb des Arbeitsbehälters sind in hinreichend großem Abstand, so daß der Arbeitsbehälter in seine drei Arbeitsstellungen geschwenkt werden kann, auf dem Chassis die Einrichtungen für das Herstellen der Boden-Wasser-Gemische und für das Aufbereiten der Böden angeordnet, von denen über Schnellkupplungen flexible Leitungen zu den Düsen usw. im Arbeitsbehälter führen.

Auf dem Chassis ist eine Einrichtung 16 zum Aufbereiten des in geschlossenem Kreislauf geführten Wassers zum Herstellen des Gemisches und zur Verwirbelung des Gemisches angeordnet. Von ihr ausgehend verläuft eine Leitung 17 mit Abzweigen 18, die endseitige Düsen 19 und gegebenenfalls in der Wandung nicht dargestellte Schlitzdüsen aufweisen.

Die Querwand weist unterhalb der Ablaufkante mindestens eine in den Raum 12 mündende Leitung 20 auf, die das Wasser bzw. das Wasser mit den in ihm gelösten Stoffen zur Einrichtung 16 zurückführt.

Auf dem Chassis ist weiterhin die Einrichtung 21 angeordnet, die über die Leitung 22 mit den Abzweigen 23, welche an ihren freien Enden Düsen aufweisen, ein Inertgas bzw. Reaktionsgas und/oder Dampf an das Gemisch abgeben kann. Sie weist deshalb einen Dampferzeuger auf.

Auf dem Chassis ist weiterhin eine Pumpe 25 mit einer Absaugeinrichtung 26 für die erste aufschwimmende, schaumartige und Kontaminationen enthaltende Schicht 26' angeordnet, die entfallen können, wenn diese erste aufschwimmende Schicht wie die anderen aufschwimmenden Schichten von dem Auffangbehälter 13 aufgenommen wird.

Auf dem Chassis ist weiterhin eine Einrichtung 27 angeordnet, von der eine Leitung 31 zu in der Stirnwand 28 des Arbeitsbehälters angeordneten Düsen 29 führt, die die aufschwimmenden schaumartigen und Kontaminationen enthaltenden Schichten über die Überlaufkante in den Auffangbehälter 13 fördern.

Auf dem Chassis ist weiterhin eine Einrichtung 30 angeordnet, von der eine Leitung 27, zu einer in den Innenraum führenden des Arbeitsbehälters oberhalb der aufschwimmenden Schichten angeordnete Düsenanordnung zum Erzeugen eines Unterdruckes bzw. eines Überdruckes führt.

In dem Arbeitsbehälter sind in das Gemisch eintauchende Elektrodenplatten 32 und 33 angeordnet, an denen ein an sich bekannter Gleichspannungsgenerator 34 eine Hochspannung erzeugt.

Weiterhin weist der Arbeitsbehälter einen in das Boden-Wassser-Gemisch eintauchenden Schwingboden bzw. einen Ultaschallerzeuger 35, sowie ein Kupfernetz 36 auf.

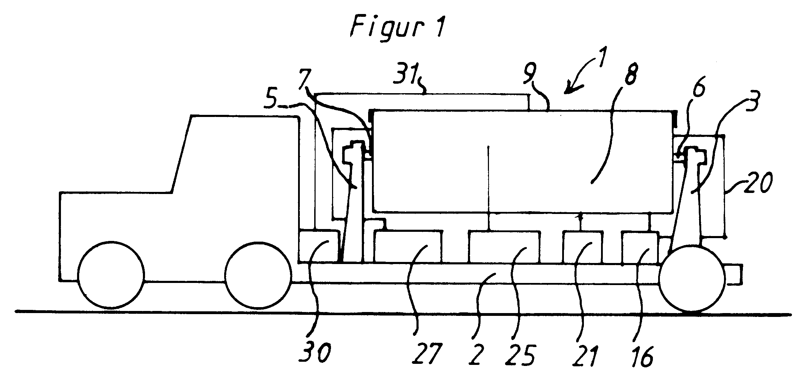

Die Figur 3 zeigt einen schematischen Schnitt durch den Arbeitsbehälter senkrecht zur Zeichenebene der Figur 1, aus der die drei Arbeitsstellungen a, b und c des Arbeitsbehälters zu entnehmen sind.

In Figur 3 ist das parallel zur Achse des Arbeitsbehälters am Boden des Arbeitsbehälters ein Absaugrohr 37 mit als Düsen ausgebildeten Abzweigleitungen 38 angeordnet, die in der zweiten Arbeitsstellung des Arbeitsbehälters nach Beendigen der Aufbereitung eines Bodens das Wasser absaugen, das der Einrichtung 16 zum Aufbereiten des in geschlossenem Kreislauf geführten Wassers zugeführt wird.

Die Kippeinrichtung für das Verschwenken des Arbeitsbehälters in die erste, in die zweite und in die dritte Arbeitsstellung, aus der der Arbeitsbehälter den aufbereiteten Boden in einen nicht dargestellten Auffangbehälter übergibt, ist nicht dargestellt.

Aus Figur 3 ist weiterhin ersichtlich, daß die einen Abzweigleitungen 38 im Bereich der von dem Boden und der einen Seitenwand gebildeten Innenkante 39 enden, die in der zweiten Arbeitsstellung die untere Scheitellage einnimmt, so daß eine Schüttrinne gebildet ist.

Die Figur 4 zeigt im Schnitt senkrecht zur Zeichenebene der Figur 2 schematisch die Einrichtung 40 zum Überwachen der Lichtschwächung in der Zwischenschicht, die mit 41 bezeichnet ist und die zwischen der aufschwimmenden Schicht 26' und dem Gemisch 42 verläuft.

In den Bordwänden 45 und 44 des Arbeitbehälters 8, der im Ausschnitt dargestellt ist, ist jeweils eine Glasplatte 45 bzw. 46 innerhalb eines Gehäuses 48 bzw. 48 eingesetzt.

Das Gehäuse 47 weist eine Fotozelle 49 und das Gehäuse 48 eine Fotozelle 49 auf.

Im Gehäuse 48 ist eine Lichtquelle 50 angeordnet, die Licht mit vorgebbarer Wellenlänge zur Durchführung der Absorptionsspektralanalyse aussendet oder eine Lichtquelle mit mehreren in ihren Strahlengang einschwenkbaren Filtern zum Erzeugen monochromatischen Lichts angeordnet. Die Einzelheiten sind an sich bekannt und deshalb nicht weiter erläutert.

Die beiden Fotozellen 49 und 49 sind somit in vorgegebenem Abstand im Strahlengang der Lichtquelle angeordnet. Ihre Ausgangssignale werden über die Leitungen 51 bzw. 52 der Auswerteeinrichtung 53 zugeführt, die am Ausgang 54 die Differenzsignale abgibt. Die Ausgangssignale werden wie oben beschrieben ausgewertet. Mit ihnen wird gegebenenfalls die Aufbereitung der Böden über Rechner usw. gesteuert bzw. geregelt.

Nicht dargestellt und beschrieben sind die Druckerzeuger und weiterhin auch nicht die Pumpen, die in den Einrichtungen 16, 21, 25, 27 und 30 vorhanden sind und mit denen die Strömungsrichtung der Medien geändert werden kann, um erforderlichenfalls die Ablagerungen usw. in den Düsen zu entfernen.

Der besondere Vorteil besteht darin, daß eine mobile Vorrichtung zur Bodensanierung geschaffen ist, die schnell an Katastrophenorte zur Sanierung (zum Beispiel bei Unfällen von Tanksattelzügen, die Chemikalien, Öle und dergleichen transportieren) gebracht werden kann, die das benötigte Wasser mit sich führt, das im Kreislauf geführt Wasser aufbereitet, so daß ihr Einsatz nicht davon abhängig ist, daß an den Katastrophenorten ein Wasserversorgungsnetz vorhanden ist.

Dieser schnelle Einsatz an Katastrophenorten hat noch den weiteren Vorteil, daß bei derartigen Unfällen die Eindringtiefe der Kontaminationen in den Boden möglichst gering gehalten werden kann.

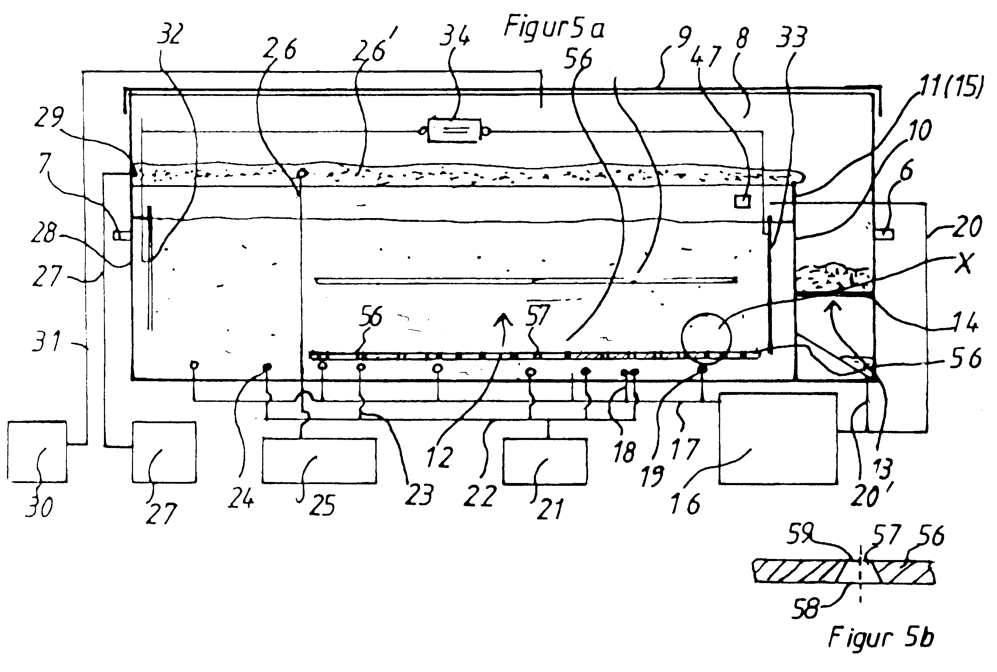

Die Figur 5a zeigt eine Abwandlung der Figur 2 in der Weise, daß anstelle des Schwingbodens bzw. des Ultraschallerzeugers 35 im vorgegebenen Abstand zu den Innenwänden des Arbeitsbehälters und im vorgegebenem Abstand zu seinem Boden auf den Abstandsprofilen 55 eine Platte 56 mit Durchbrüchen 57 angeordnet ist.

Die Düsen 19 der Abzweige 18 der Leitung 17 sind in vorgegebenem Abstand zur Unterseite der Platte derart angeordnet, daß das aus den Düsen austretende Gemisch auf die Durchbrüche gerichtet ist.

Die Figur 5 b zeigt die in Figur 5a mit X bezeichnete Einzelheit eines Durchbruchs in vergrößerter Darstellung.

Die Durchbrüche 57 haben im Anströmbereich senkrecht zu ihrer Achse einen größeren Querschnitt 58 als im Austrittsbereich, dessen Querschnitt mit 59 bezeichnet ist und an dessen scharfen Kante 60 die Luftblasen zerteilt werden.

Die Durchbrüche haben im einfachsten Falle - wie in Figur 5b dargestellt - senkrecht zu ihrer Achse einen runden Querschnitt, sie können auch als Langlöcher, Schlitze, die vor den Kanten der Platte enden, ausgebildet sein, elliptischen Querschnitt haben usw.

Wesentlich ist, daß die Querschnittsfläche im Austrittsbereich einen kleineren Querschnitt als im Eintrittsbereich hat.

Durch diese Maßnahmen wird ein effektiveres Durchströmen und Dekontaminieren des Behälterinhalts erreicht.

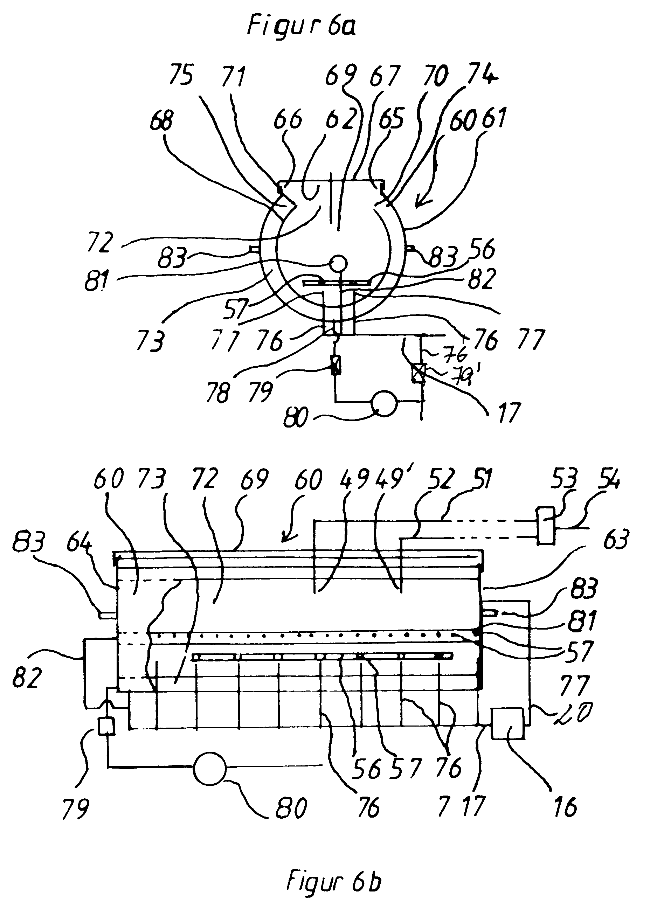

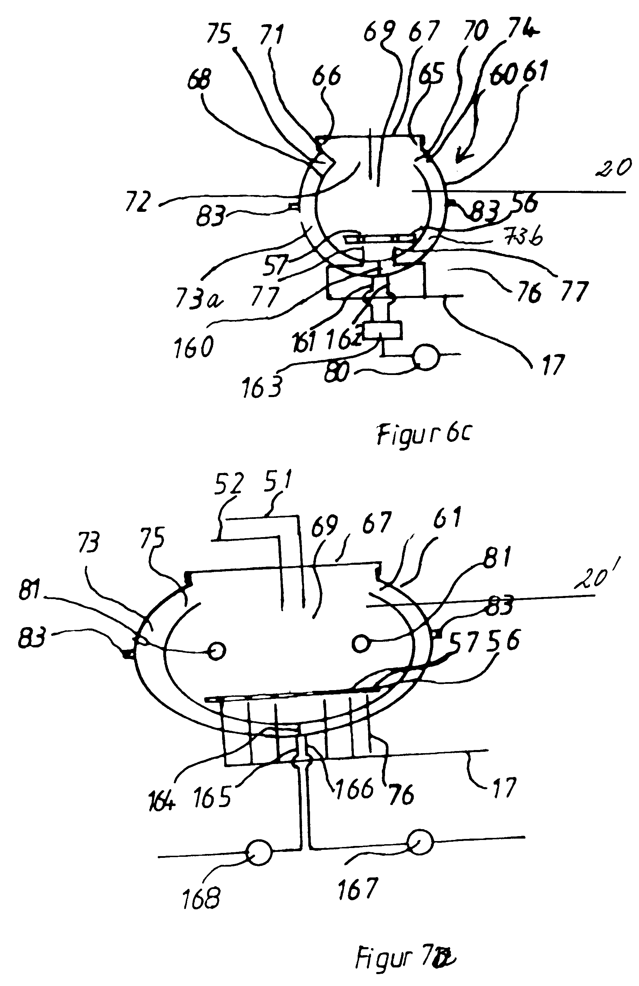

Die Figur 6 a zeigt eine Vorrichtung, deren Arbeitsbehälter die Form eines Hohlzylinders mit senkrecht zur Zeichenebene verlaufender Achse a - a hat.

Die Figur 6 b zeigt einen durch die Achse verlaufenden Schnitt senkrecht zur Zeichenebene der Figur 6 a.

Der Arbeitsbehälter weist gemäß Figur 6a einen äußeren Behälter 60 auf, der ein in Achsenrichtung mit Stirnplatten (Figur 6b) verschweißter offener Hohlzylinderabschnitt 61 ist, wobei aus einem Hohlzylinderabschnitt mit den gleichen Abmessungen im Querschnitt ein kreisbogenförmiger Bereich in Längsrichtung (senkrecht zur Zeichenebene) unter Bildung einer rechteckigen Öffnung 62 entfernt ist und der mit den Stirnplatten 63 und 64 verschweißt ist.

Die in Achsenrichtung verlaufenden Ränder des in Achsenrichtung offenen Hohlzylinderabschnittes sind unter Bildung der Stege 65 und 66 abgewinkelt und bilden mit den entsprechenden peripheren Abschnitten der Stirnplatten 62 und 63 einen geschlossenen Rahmen, der von dem Deckel 67 übergriffen wird.

In dem äußeren Behälter ist ein ebenfalls in Achsenrichtung offener Hohlzylinderabschnitt 68 von kleinerem Durchmesser angeordnet und ebenfalls mit den beiden Stirnplatten verschweißt, die mit ihm die Kammer 69 begrenzen.

Die Ränder 70 und 71 des in Achsenrichtung offenen Hohlzylinderabschnittes 68 und die beiden Stirnplatten begrenzen die Öffnung 72 der Kammer 69.

Die beiden in Achsenrichtung offenen Hohlzylinderabschnitte begrenzen zwischen sich mit den beiden Stirnplatten eine Kammer 73, die zwei in Achsenrichtung und in einer Ebene verlaufenden rechteckigen Öffnungen 74 und 75 hat, die jeweils von einer der Kanten des in Achsenrichtung offenen Hohlzylinderabschnittes 68 und der Innenwandung des in Achsenrichtung offenen Hohlzylinderabschnittes 61 gebildet werden.

Im Bodenbereich des Arbeitsbehälters sind im Bodenbereich durch die äußere Kammer 73 in die Kammer 69 ragende Leitungsabschnitte 76 mit endseitigen Düsen 77 geführt, wobei die Düsen von einer Leitung abzweigen, die unterhalb des Arbeitsbehälters verläuft und mit der Leitung 17 in Figur 2 bzw. 5a identisch und deshalb mit dem gleichen Bezugszeichen 17 bezeichnet ist.

Von der inneren Kammer 69 führt die Leitung 20 zu der nicht eingezeichneten Einrichtung (Figur 5, Bezugszeichen16') zum Aufbereiten des in geschlossenem Kreislauf geführten mit den in Lösung gehenden bzw. suspendierten Stoffen Wassers, wobei das Wasser anschließend über die Leitung 17 den Düsen 77 und damit der inneren Kammer 69 unter Bildung des Kreislaufs zugeführt wird.

Der Behälter weist auf seinen Stirnplatten die Zapfen 83 auf, so daß er um seine Achse in oder gegen die Uhrzeigerrichtung verschwenkt werden kann, so daß die rechteckige Öffnung 74 bzw. 75 eine Überlaufkante für die Übergabe der Kontaminationsschichten aus der inneren Kammer 69 in die äußere Kammer 73 bildet.

Der Arbeitsbehälter kann, wie in Figur 6a dargestellt, die Zapfen auf der Außenwand der äußeren Kammer 73 aufweisen, so daß ein Verschwenken senkrecht zur Achse des Arbeitsbehälters möglich ist.

Der Arbeitsbehälter weist in seinem unteren Scheitelbereich eine Abflußleitung 78 mit einem Ventil 79 und einer Pumpe 80 auf, mit der aus der äußeren Kammer 73 die von ihr übernommenen aufschwimmenden und Kontaminationen enthaltenden Schichten in einen nicht dargestellten Auffangbehälter gepumpt werden.

Die Übergabe dieser Schichten aus der äußeren Kammer an den Auffangbehälter kann auch durch ein Verschwenken des Arbeitsbehälters aus der in Figur 6a gezeigten Stellung um 180° um die stirnseitigen Zapfen erfolgen.

In der inneren Kammer 69 ist parallel zur Achse a - a und unterhalb der Achse verlaufend ein mit den Stirnplatten verbundenes Rohr 81 mit Durchbrüchen angeordnet, das der Leitungsabschnitt 78 über ein Ventil 79 und über eine Pumpe 80, sowie über das der Pumpe nachgeschaltete Mehrwege 79, das in der einen Schaltstellung (einen Arbeitsstellung) über einen Leitungsabschnitt 76 mit der Leitung 17 der Einrichtung 16 verbindet.

In der anderen Schaltstellung (zweiten Arbeiststellung) ist der Abschnitt 76 gesperrt und die Pumpe 80 fördert den Inhalt der Kammer 73 über den vom Mehrwegeventil abzweigenden und nach unten zeigenden nicht bezifferten Leitungsabschnitt in einen ebenfalls nicht dargestellten Aufnahmebehälter, während in der dritten Schaltstellung (Ruhestellung) das Rohr funktionslos bzw. abgeschaltet ist.

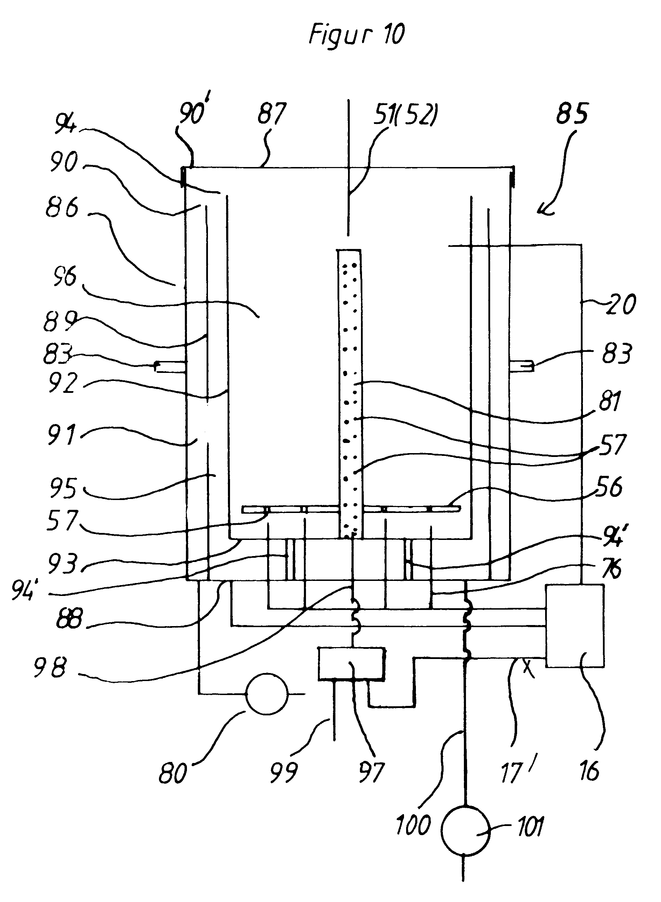

Das Rohr 81 ist in Figur 8 im Querschnitt dargestellt und weist in einem oberen Segmentbereich Durchbrüche auf, die mit den Durchbrüchen in Figur 5 a funktionsgleich und identisch sind und deshalb ebenfalls mit 56 bezeichnet sind.

Das über diese Durchbrüche zugeführte Wasser bewirkt aufgrund der hohen Austrittsgeschwindigkeit eine zusätzliche Pumpwirkung bzw. zusätzliche Umwälzung in de inneren Kammer 69.

Der im Leitungsabschnitt 78 angeordnete Ventil 79 wird je nach Bedarf in Arbeitstellung oder Sperrstellung geschaltet. ist.

Über dieses Rohr können auch Kontaminationen abgepumpt werden, wobei die Verbindung zur Leitung 17 entfällt und statt dessen eine Pumpe (nicht dargestellt) vorgesehen ist, die den Inhalt der Kammer 69 in einen ebenfalls nicht dargestellten Auffangbehälter pumpt.

Die Stirnplatten weisen Zapfen 83 (Figur 6a) auf, die in nicht dargestellten Lagern verschwenkbar gelagert sind, so daß der Arbeitsbehälter um die Zapfen nach der einen oder anderen Seite, gegebenenfalls nach Lösen von Leitungskupplungen (nicht dargestellt), verschwenkt werden kann und über die Öffnung 74 bzw. 75 aus der Kammer 69 die aufschwimmenden Schichten in die Kammer 73 dekantiert werden und mittels der Pumpe80, abgepumpt werden, sobald der Arbeitsbehälter wieder seine in Figur 6a gezeigte Stellung eingenommen hat.

Die Zapfen 83 können auch wie in Figur 6a dargestellt, auf einem Durchmesser liegend auf der Außenseite des Arbeitsbehälters angeordnet sein, so daß der Arbeitsbehälter senkrecht zu seiner Achse verschwenkbar ist.

Die in den Figuren 6a, 6b dargestellte Vorrichtung weist je nach Bedarf weitere, in Figur 2 dargestellte Einrichtungen auf, die jedoch der Übersicht halber nicht dargestellt sind.

Dies gilt auch für die folgenden Figuren.

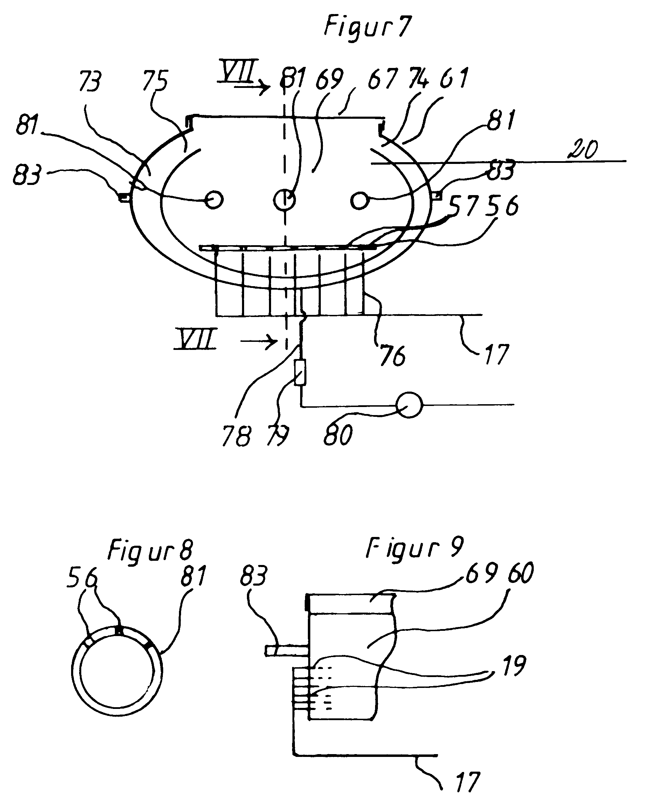

Die Figur 7 zeigt in der Darstellung der Figur 6a einen Arbeitsbehälter 84 von elliptischem Querschnitt und dem gleichen Konstruktions- und Funktionsprinzip wie der Arbeitsbehälter in den Figuren 6a und 6b, wobei der besseren Übersicht Einzelheiten aus der Figur 6a weggelassen sind.

Aus diesem Grunde sind ebenfalls gleiche Teile in den Figuren 7 und 6a, 6b mit den gleichen Bezugszeichen bezeichnet, wobei der Schnitt gemäß VII-VII mit der Figur 6b übereinstimmt, und der besseren Übersicht zusätzlich Einzelheiten der Figur 6a weggelassen sind.

Dies gilt auch für die weiteren Ausführungsbeispiele der folgenden Figuren.

Die Figur 6 c zeigt eine Abwandlung der Figur 6a. In Figur 6c teilt die in Achsenrichtung verlaufende Trennwand 160 die äußere Kammer 73 der Figur 6a in die beiden Teilkammern 73 a und 73 b, die über eine Leitung 161 bzw. 162 über das Mehrwegeventil 163 mit der Pumpe 80 verbindbar sind, die den Inhalt der Teilkammern an nicht dargestellt Behälter übergibt.

Mit dieser Vorrichtung können durch abwechselndes Verschwenken des Arbeitsbehälters um die stirnseitigen Zapfen die nacheinander aufschwimmenden und Kontaminationen aufweisenden Schichten in die eine oder andere Teilkammer übergeben werden, aus denen sie anschließend in Aufnahmebehälter gepumpt werden.

Die Figur 7a zeigt eine Abwandlung der Vorrichtung nach Figur 7 und stimmt hinsichtlich ihres Funktionsprinzips mit der Vorrichtung nach Figur 6 c überein.

Die Figur 6 d zeigt eine weitere Abwandlung der Vorrichtung nach Figur 6a, indem zwei in Achsenrichtung verlaufende Trennwände 160a und 160 die äußere Kammer in drei Teilkammern 73a, 73b und 73 c unterteilen, wobei die Funktion der Kammern 73 a und 73 b mit derjenigen der Kammern 73a und 73b der Figur 6c übereinstimmt.

Die mittlere Teilkammer 73 c weist in die innere Kammer 69 mündende Durchbrüche auf, die wie diejenigen in Figur 5b ausgebildet sind.

Die Figur 7c zeigt nach dem gleichen Prinzip wie in Figur 6d eine weitere Ausbildung der Vorrichtung nach Figur 7a.

Die Figur 8 zeigt einen Querschnitt durch das Rohr 81, das in seinem oberen Segmentbereich die Durchbrüche 56 aufweist, die in der gleichen Weise wie die Durchbrüche der Platte in Figur 5a ausgebildet und in Figur 5b dargestellt sind.

Die Figur 9 zeigt im Ausschnitt die Figur 6b im Bereich der linken Stirnplatte, die in Abwandlung der Figur 6b Düsen aufweist, deren Funktion mit den Düsen 19 in Figur 2 identisch und die deshalb das gleiche Bezugszeichen aufweisen.

Die Figur 10 zeigt einen zylindrischen Arbeitsbehälter 85 mit lotrechter Achse, der den nach oben offenen hohlen Zylinderabschnitt 86 mit dem entfernbaren Deckel 87 aufweist.

Der hohle Zylinderabschnitt 86 ist mit der Bodenplatte 88 verschweißt.

In ihm ist koaxial und in vorgegebenem Abstand ein weiterer hohler Zylinderabschnitt 89 angeordnet, der mit der Bodenplatte 88 ebenfalls verschweißt ist, so daß eine nach oben offene, die Kanten 90 und 90 aufweisende Kammer 91 von kreisringförmigem Querschnitt gebildet ist.

In dem Zylinderabschnitt 89 ist koaxial und im Abstand zur seiner Innenseite ein weiterer hohlzylindrischer Abschnitt 92 angeordnet, der mit einer Bodenplatte 93 verschweißt ist und auf den Abstandsprofilen 94 distanziert zur Bodenplatte 88 angeordnet ist.

Der hohlzylindrische Abschnitt 92 und die mit ihm verbundene Bodenplatte 93 begrenzen die zylindrische Kammer 96, die den Rand bzw. die Kante 94 aufweist.

Durch die Bodenplatten 88 und 93 sind Leitungsabschnitte 76 geführt, die endseitig in die hohlzylindrische Kammer 96 ragen und Düsen aufweisen.

Weiterhin ist in der Kammer 96 eine Platte mit Durchbrüchen angeordnet, die die gleiche Funktion wie die Platte 56 mit den Durchbrüchen 57 in den Figuren 5a und 5 b hat und die deshalb die gleichen Bezugszeichen aufweist. Die Platte 56 begrenzt mit dem hohlen Zylinderabschnitt einen in sich geschlossenen, nicht bezeichneten Ringspalt, so daß über diesen Ringspalt eine in sich geschlossene Strömung in der Kammer 96 mit einem zur Zylinderachse symmetrischen Verlauf sich einstellt, sobald Durchbrüche der Platte 56 von unten angeströmt werden.

Weiterhin ist in der Kammer 96 ein Rohr mit Durchbrüchen angeordnet, das die gleiche Funktion wie das Rohr mit den Durchbrüchen in Figur 6a, 6b hat und deshalb mir den gleichen Bezugszeichen bezeichnet ist.

Das Rohr 81 ist durch die Platte 56 hindurchgeführt und mit der Bodenplatte 93 verbunden. In das Rohr führt der Leitungsabschnitt 98, der über ein Mehrwegeventil 97 entweder über die Leitung 17' mit der Einrichtung 16 oder mit einer Leitung 99 für die Zufuhr von Wasser verbindbar ist.

Weitere mit den vorhergehenden Figuren gleiche bzw. funktionsgleiche Teile sind mit den gleichen Bezugszeichen versehen oder der Übersicht halber weggelassen.

Zum Dekantieren der mit Kontaminationen belasteten aufschwimmenden Schichten wird der Arbeitsbehälter entweder um die Zapfen 83 verschwenkt oder es wird Wasser durch das Rohr 81 und dessen Durchbrüche 57 in die Kammer 96 gefördert. Zu diesem Zwecke wird das Wegeventil 97 so geschaltet, daß es die Verbindung mit der Leitung 99 herstellt.

Die Ränder bzw. Kanten der Kammern sind in unterschiedlichen Höhen derart angeordnet, daß ein Dekantieren auch so erfolgen kann, daß Wasser in die Kammer 95 engespeist wird bis sein Spiegel die Kante 90 erreicht hat.

Anschließend werden durch Einleiten von Wasser oder Wasser mit noch vorhandenen Kontaminationen in die Kammer 96 die aufschwimmenden Schichten mit den Kontaminationen aus der Kammer 96 der Kammer 91 zugeführt aus, der sie mittels der Pumpe 80 in einen nicht dargestellten Behälter gepumpt werden.

Es können auch kontaminierte Schichten wahlweise den Kammern 91 und 95 zugeleitet werden, indem die Kammer 95 geflutet wird bzw. nicht geflutet wird. Auf diese Weise ist eine einfache Trennung der nacheinander aufschwimmenden kontaminierten Schichten und damit prinzipiell eine Trennung verschiedener Kontaminationen möglich.

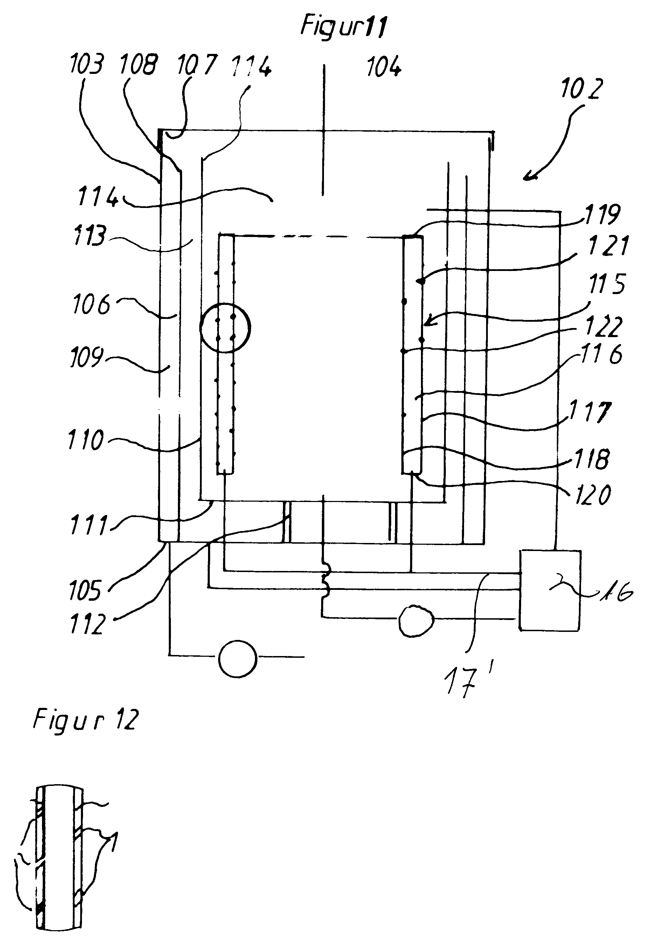

Die Figur 11 zeigt ein weiteres Ausführungsbeispiel für einen zylindrischen Arbeitsbehälter mit lotrechter Achse, der mit 102 bezeichnet ist.

Der Arbeitsbehälter weist einen nach oben offenen hohlen Zylinderabschnitt 103 mit dem lösbaren Deckel 104 auf.

Der hohle Zylinderabschnitt 103 ist mit einer Bodenplatte 105 verschweißt.

In dem hohlen Zylinderabsschnitt 103 ist zu ihm koaxial und in vorgegebenem Abstand ein weiterer hohler Zylinderabschnitt 106 angeordnet, der mit der Bodenplatte 105 ebenfalls verschweißt ist, so daß eine nach oben offene, die Kanten 107 und 108 aufweisende Kammer 109 von kreisringförmigem Querschnitt gebildet ist.

In dem hohlen Zylinderabschnitt 106 ist koaxial und im Abstand zur seiner Innenseite und zu seiner Bodenplatte 105 ein hohlzylindrischer Abschnitt 110 angeordnet, der mit einer Bodenplatte 111 verschweißt ist und auf den Abstandsprofilen 112 distanziert zur Bodenplatte 105 angeordnet ist.

Die hohlzylindrischen Abschnitte 103 und 106 begrenzen zusammen mit ihrer Bodenplatte 105 die Kammer 106, die hohlzylindrischen abschnitte 106 und 110 mit ihren Bodenplatten die Kammer 113 mit ihm verbunden Bodenplatte 103 begrenzen die in ihrem mittleren Bereich zylindrische Kammer 113, die die Ränder bzw. die Kanten 108 und 114' aufweist.

Der hohlzylindrische Abschnitt 110 und seine Bodenplatte 111 begrenzen die nach oben offene zylindrische Kammer 114, die die Kante bzw. den Rand 114' aufweist.

In der Kammer 130 ist ein in sich geschlossener hohlzylindrischer Körper 115 distanziert zur Bodenplatte 111 und zur Innenwand des hohlen Zylinderabschnittes 110 auf nicht dargestellten Abstandsprofilen angeordnet.

Der hohlzylindrische Körper besteht aus den beiden zueinander unter Ausbildung der Ringkammer 116 distanziert zueinander angeordneten Rohrabschnitten 117 und 118, die an den Stirnseiten mit einer Ringscheibe 119 bzw. 120 verschweißt sind.

Die Rohrabschnitte weisen Durchbrüche 121 bzw. 122 auf, die wie die Durchbrüche in Figur 5 b ausgebildet sind.

Die Ringkammer 116 ist über die Leitung 17 mit de Einrichtung ^6 verbunden.

Die Achse der Durchbrüche 121 ist schräg nach oben in Richtung zum Deckel und die Achse der Durchbrüche 122 schräg nach unten in Richtung zur Bodenplatte 111 gerichtet falls die Strömungrichtung zwischen dem hohlzylindrischen Körper 115 und dem hohlzylindrichen Abschnitt 110 nach oben und im Inneren des hohlzylindrischen Körpers nach unten gerichtet ist.

Falls die Strömungrichtung entgegengesetzt verläuft, zeigen die Achsen der Durchbrüche ebenfalls in die umgekehrte Richtung.

Die Achsenrichtung ergibt sich eindeutig daraus, daß sie stets in Richtung vom größeren Eintrittsquerschnitt in Richtung zum kleineren Austrittsquerschnitt definiert ist.

Die Figur 12 zeigt die Einzelheit X aus Figur 11 in vergrößerter Darstellung.

Zum Dekantieren der mit Kontaminationen belasteten aufschwimmenden Schichten in die Kammer 109 wird die Kammer 113 bis zur Kante 108 geflutet und dann über den hohlzylindrischen Körper 115 und seine Durchbrüche Wasser der Kammer 130 zugeführt.

Zum Dekantieren der mit Kontaminationen belasteten aufschwimmenden Schichten in die Kammer 106 wird bei leerer Kammer 106 über den hohlzylindrischen Körper 115 und seine Durchbrüche Wasser der Kammer 130 zugeführt.

Der Arbeitsbehälter kann zu diesem Zwecke auch um die Zapfen 83 geschwenkt werden.

Entsprechend können wie in Figur 10 durch wechselweises Fluten bzw. Entleeren der Kammer 113 Kontaminationsschichten voneinander getrennt werden, wie dies in Figur 10 im Prinzip beschrieben ist.

Weitere mit der Figur 10 gleichen Teile sind mit den gleichen Bezugszeichen bezeichnet bzw. der besseren Übersicht wegen weggelassen.

Dies gilt auch für die in den Figuren 2 bis 9 beschriebenen weiteren Einrichtungen, die zum Einsatz kommen bzw. kommen können.

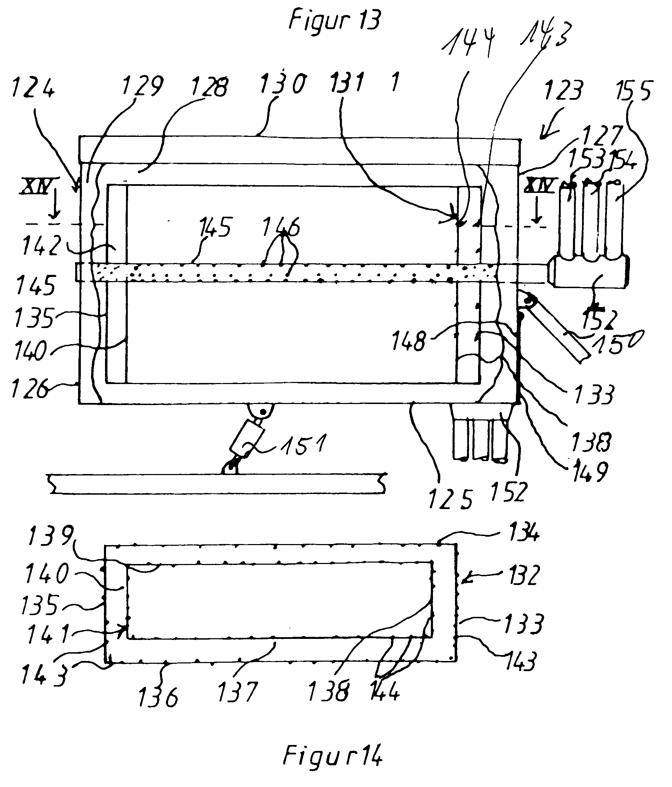

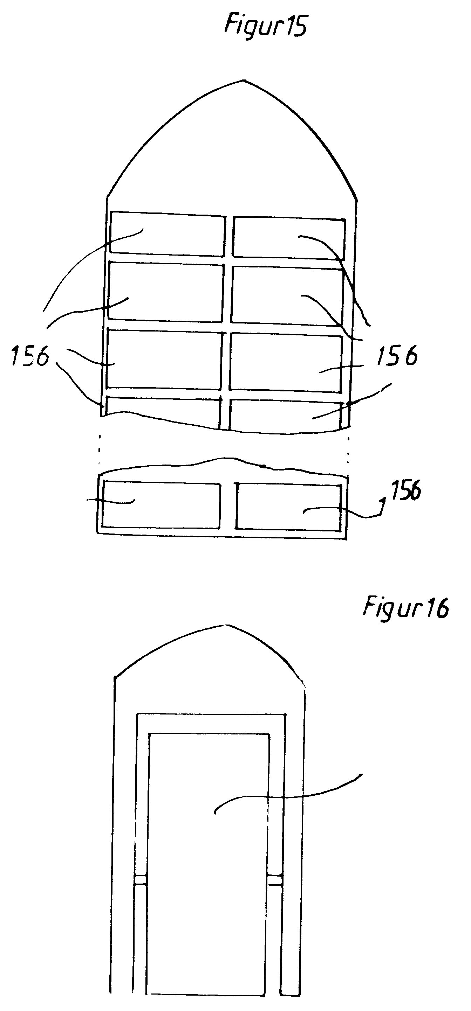

Die Figur 13 zeigt in teilweise geschnittener Seitenansicht ein weiteres Ausführungsbeispiel einer mit 123 bezeichneten Dekontaminationsvorrichtung und Figur 14 einen Schnitt gemäß XIV - XIV in Figur 13.

Die Dekontaminationsvorrichtung besteht aus dem nach oben offenen hohlzylindrischen Arbeitsbehälter 124 mit der Bodenplatte 125, der vorderen Stirnwand 126, der hinteren Stirnwand 127 und den beiden Seitenwänden 128 bzw. 129 und weist den hydraulisch bzw. pneumatisch betätigbaren Deckel 130 auf.

In dem nach oben offenen Arbeitsbehälter ist im Abstand zu den Stirnwänden der Bodenplatte und dem Deckel ein doppelwandiger nach oben und unten offener quaderförmiger Körper 131 angeordnet.

Er besteht gemäß Figur 14 aus den zu einem hohlen Rechteckprofil 132 an den zur Zeichenebene senkrecht verlaufendenden Kanten miteinander verschweißten Platten 133, 134, 135 und 136, in dem ein zweites aus den Platten 137, 138, 139 und 140 gebildetes es hohles Rechteckprofil 141 im vorgegebenen Abstand angeordnet ist, so daß beide Rechteckprofile eine im Querschnitt rahmenartige Kammer 140 begrenzen, die an den oberen und der unteren Stirnseite mit in den Figuren 13 und 14 nicht dargestellten Flachprofilabschnitten verschweißt ist.

Die Platten weisen Durchbrüche 143 bzw. 144 auf, die so ausgebildet und angeordnet sind wie die Durchbrüche des in sich geschlossenen hohlzylindrischen Körpers 115 in Figur 11.

Durch die Platten 133, 138, 135 und 140 des quaderförmigen Körpers ist das Rohr 145 geführt, das durch die Stirnwände 126 und 127 des Arbeitsbehälters 123 ebenfalls hindurchgeführt ist und mit diesen Platten, sowie den Stirnwänden verschweißt ist.

Anstelle dieses Körpers kann auch ein Körper nach Figur 11 treten.

Das Rohr 145 weist ebenfalls Durchbrüche 146 wie das Rohr 81 in in Figur 10 auf, die in der Kammer 142 einen erheblich größeren Durchmesser haben.

Die hohlzylindrische Arbeitsbehälter 127 weist unterhalb des Rohres 145 eine bis zur Bodenplatte 125 reichende Öffnung 148 auf, die durch die unterhalb des Rohres 145 angelenkte und verriegelbare Klappe 149 verschließbar ist.

An der Bodenplatte 125 und an dem hohlzylindrischen Arbeitsbehälter und an einem im Ausschnitt dargestellten jedoch nicht bezifferten Rahmen sind die pneumatischen bzw. hydraulischen Arbeitszylinder 150 bzw. 151 angelenkt, so daß der Arbeitsbehälter im Uhrzeigersinne verschwenkt werden kann und die Bodenplatte eine Rutsche für das auf ihre befindliche Material bildet, das bei geöffneter Klappe in einen nicht dargestellten Auffangbehälter gekippt wird.

Das Rohr ist wie aus Figur 13 ersichtlich an eine nicht dargestellte Ventile aufweisende Einrichtung 152 angeschlossen, die mit Rohrleitungen 153, 154 und 155 verbunden ist, über die Wasser und /oder Luft dem Arbeitsbehälter zugeführt bzw. ein Überdruck bzw. Unterdruck im Arbeitsbehälter erzeugt werden kann.

Eine gleiche Einrichtung weist die Bodenplatte 125 auf und hat deshalb die gleichen Bezugszeichen.

Der zu dekontaminierende Boden bzw. das zu dekontaminierende Wasser wird dem Arbeitsbehälter nach Anheben des Deckels zugeführt.

Die Funktionsweise der Vorrichtung nach den Figuren 13 und 14 entspricht im Prinzip den bereits erläuterten Ausführungsbeispielen.

Anstelle der zylindrischen Ausbildung des Arbeitsbehälters kann auch eine zur lotrechten Achse rechteckige Ausbildung vorgenommen werden.

Die Figuren 15 und 16 zeigen jeweils in Draufsicht eine als Schiff ausgebildete Dekontaminationsvorrichtung.

Auf dem Schiffsdeck der Figur 15 sind senkrecht zu beiden Seiten der Mittellinie des Schiffes mehrere Dekontaminationsvorrichtungen 156 nach einer der Figuren 4 bis 11 angeordnet.

Ihnen werden mittels eines nicht dargestellten Eimerkettenbaggers, dessen Einsatz auf Gewässern üblich ist, die kontaminierten Schichten auf dem Boden des fließenden bzw. stehenden Gewässers zugeführt, wobei zugleich von der kontaminierten Wasserschicht oberhalb des kontaminierten Bodens eine entsprechende Menge mittels Pumpen zugeführt wird bzw. auch Wasser aus der Uferzone falls die Konzentrationen der Kontaminationen zu hoch sind. In der gleichen Weise ist es möglich, zum Beispiel aus Auffangbecken chemischer Anlagen im Uferbereich die Dekontaminationen zu entfernen und aufzubereiten.

Es ist weiterhin möglich, die einzelnen Dekontaminationsanlagen zum Beispiel mittels Hubschraubern in den Uferbereichen an Land einzusetzen, so daß die Abmessungen der Anlagen nicht durch die Vorschriften der Straßenverkehrsordnung eingeschränkt sind.

In Figur 16 ist der Schiffsrumpf in Richtung zum Heck als Doppelrumpf ausgebildet. Zwischenden beiden Rümpfen ist auf Schwenkzapfen und eine Dekontaminationsvorrichtung157 zum Beispiel nach Figur 6a und 6 b verschwenkbar gelagert.

In den Fällen, in denen biologisch abbaubare Restkontaminationen vorhanden sind, wird vor Beendigen des betreffenden Verfahrens noch eine biologische Dekontamination durchgeführt, wobei gegebenenfalls über eine zusätzliche Leitung (nicht dargestellt) an sich bekannte Bakterienstämme den Dekontaminationsanlagen zugeführt werden.

Erfindungsgemäß sind Verfahren und Vorrichtungen geschaffen, die ein breites Anwendungsspektrum haben, wobei die zu dekontaminierenden Chargen nicht über große Strecken transportiert werden müssen.

**Patentansprüche**

1.  Verfahren zum Aufbereiten von kontaminierten Böden, indem kontaminierter Boden und Wasser gemischt werden, die auf dem Boden-Wasser-Gemisch aufschwimmende, schaumartige und Kontaminationen enthaltende Schicht entfernt, der aufbereitete Boden und das gelöste bzw. suspendierte Stoffe enthaltende Wasser voneinander getrennt werden, das Wasser mit den in Lösung gehenden bzw. suspendierten Stoffen des Boden-Wasser-Gemisches unter Verwirbelung im Kreislauf so geführt wird, daß sich zwischen dem Boden-Wasser-Gemisch und der aufschwimmenden, schaumartigen und Kontaminationen enthaltenden Schicht eine von Boden freie Zwischenschicht bildet, in vorgegebenen Zeitintervallen die jeweils aufschwimmenden, schaumartigen und Kontaminationen enthaltenden Schichten entfernt werden bis die Lichtabsorpton der Zwischenschicht für Licht vorgegebener Wellenlänge jeweils einen konstanten Absorptionswert zeigt.

2.  Verfahren nach Anspruch 1,
    dadurch gekennzeichnet, daß
    entsprechend der durch Absorptionsspektralanalyse der von Boden freien Zwischenschicht und/oder der durch chemische Analysen ermittelten Kontaminationen dem Wasser chemische Verbindungen zum Überführen von weiteren Kontaminationen in die aufschwimmenden, schaumartigen und Kontaminationen enthaltenden Schichten zugesetzt werden.

3.  Verfahren nach Anspruch 1 oder 2,
    dadurch gekennzeichnet, daß
    dem Boden-Wasser-Gemisch zusätzlich zu dem im Kreislauf geführten Wasser mit den in Lösung gehenden bzw. suspendierten Kontaminationen noch Luft und/oder Dampf zugeführt wird bzw. werden.

4.  Verfahren nach Anspruch 1 oder 2,
    dadurch gekennzeichnet, daß
    dem Boden-Wasser-Gemisch zusätzlich zu dem im Kreislauf geführten Wasser mit den in Lösung gehenden bzw. suspendierten Kontaminationen noch Inertgas und/oder Dampf zugeführt wird bzw. werden.

5.  Verfahren nach Anspruch 1 oder 2,
    dadurch gekennzeichnet, daß
    dem Boden-Wasser-Gemisch zusätzlich zu dem im Kreislauf geführten Wasser mit den in Lösung gehenden Kontaminationen noch mit mindestens einer Kontamination chemisch reagierendes Reaktionsgas und gegebenenfalls Dampf zugeführt wird bzw. werden.

6.  Verfahren nach einem der Ansprüche 1 bis 5,
    dadurch gekennzeichnet, daß
    während mindestens eines der Zeitintervalle der Spiegel des Boden-Wasser-Gemisches mit unter Druck stehendem Gas beaufschlagt wird.

7.  Verfahren nach einem der Ansprüche 1 bis 5,
    dadurch gekennzeichnet, daß
    während mindestens eines der Zeitintervalle oberhalb des Spiegels des Boden-Wasser-Gemisches Unterdruck erzeugt wird.

8.  Verfahren nach einem der Ansprüche 1 bis 7,
    dadurch gekennzeichnet, daß
    die oberhalb des Spiegels des Boden-Wasser-Gemisches sich bildende gas- und oder dampfförmige Phase zur Ausscheidung der in die Gas- und /oder Dampfform übergegangenen Kontaminationen einer Abscheidevorrichung für diese Kontaminationen zugeführt wird.

9.  Verfahren nach einem der Ansprüche 1 bis 8,
    dadurch gekennzeichnet, daß
    zur Abscheidung von Schwermetallen ein elektrisches Gleichspannungsfeld an zwei in das Boden-Wasser-Gemisch eintauchende Elektrodenplatten gelegt wird.

10. Verfahren nach einem der Ansprüche 1 bis 9,
    dadurch gekennzeichnet, daß
    zur Abscheidung von Quecksilber die Verwirbelung des Boden-Waser-Gemisches in Gegenwart von in das Boden-Wasser-Gemisch eintauchenden Kupfernetzen durchgeführt wird.

11. Verfahren nach einem der Ansprüche 1 bis 10,
    dadurch gekennzeichnet, daß
    in das Boden-Wassser-Gemisch Ultraschallwellen eingekoppelt werden.

12. Verfahren nach einem der Ansprüche 1 bis 11,
    dadurch gekennzeichnet, daß
    gegen Ende des Verfahrens chemische Verbindungen zum Binden der Restkontaminationen zugesetzt werden.

13. Verfahren nach Anspruch 12,
    dadurch gekennzeichnet, daß

als chemische Verbindung das unter dem Handelsnamen Waste 3400 erhältliche Polymer zugesetzt wird.

14. Verfahren nach einem der Ansprüche 1 bis 13,
dadurch gekennzeichnet, daß
vor Beendigen des Dekontaminationsverfahrens Mikrobenstämme zur Verminderung der Restkontaminationen zugesetzt werden.

15. Verfahren zum Aufbereiten kontaminierter stehender oder fließender Gewässer, indem kontaminierter Boden des kontaminierten stehenden oder kontaminierten fließenden Gewässers und/oder oberhalb des Bodens des kontaminierten stehenden oder kontaminierten fließenden Gewässers befindliches kontaminiertes Wasser entnommen und unter eventuellem Zusatz von Wasser gemischt werden, die auf dem Boden-Wasser-Gemisch aufschwimmende, schaumartige und Kontaminationen enthaltende Schicht entfernt, der aufbereitete Boden und das gelöste bzw. suspendierte Stoffe enthaltende Wasser voneinander getrennt werden, das Wasser mit den in Lösung gehenden bzw. suspendierten Stoffen des Boden-Wasser-Gemisches unter Verwirbelung im Kreislauf so geführt wird, daß sich zwischen dem Boden-Wasser-Gemisch und der aufschwimmenden, schaumartigen und Kontaminationen enthaltenden Schicht eine von Boden freie Zwischenschicht bildet, in vorgegebenen Zeitintervallen die jeweils aufschwimmenden, schaumartigen und Kontaminationen enthaltenden Schichten entfernt werden bis die Lichtabsorpton der Zwischenschicht für Licht vorgegebener Wellenlänge jeweils einen konstanten Absorptionswert zeigt.

16. Verfahren zum Aufbereiten kontaminierter stehender oder fließender Gewässer, indem die auf dem stehenden oder fließenden Gewässer schwimmende Schicht der Kontaminationen in vorgegebener Menge entnommen und erforderlichenfalls gegebenenfalls mit Wasser und/ oder mit mindestens einem schaumbildenden Mittel für die Kontaminationen gemischt wird, das Gemisch unter Verwirbelung im Kreislauf so geführt wird, daß sich unterhalb die aufschwimmenden, schaumartigen und Kontaminationen enthaltenden Schichten jeweils eine einen geringeren Kontaminationsgehalt aufweisende Schicht bildet, in vorgegebenen Zeitintervallen die jeweils aufschwimmenden, schaumartigen und Kontaminationen enthaltenden Schichten entfernt werden bis die Lichtabsorption in der jeweils einen geringeren Kontaminationsgehalt aufweisenden Schicht für Licht vorgegebener Wellenlänge jeweils einen konstanten Absorptionswert zeigt.

17. Verfahren nach Anspruch 15 oder 16,
dadurch gekennzeichnet, daß
entsprechend der durch Absorptionsspektralanalyse der Zwischenschicht und/oder der durch chemische Analysen ermittelten Kontaminationen dem Wasser chemische Verbindungen zum Überführen von weiteren Kontaminationen in die aufschwimmenden, schaumartigen und Kontaminationen enthaltenden Schichten zugesetzt werden.

18. Verfahren nach einem der Ansprüche 15 bis 17,
dadurch gekennzeichnet, daß
zusätzlich Luft und/oder Dampf zugeführt wird bzw. werden.

19. Verfahren nach einem der Ansprüche 15 bis 18,
dadurch gekennzeichnet, daß
zusätzlich Inertgas und/oder Dampf zugeführt wird bzw. werden.

20. Verfahren nach einem der Ansprüche 15 bis 19,
dadurch gekennzeichnet, daß
zusätzlich mit mindestens einer Kontamination chemisch reagierendes Reaktionsgas und gegebenenfalls Dampf zugeführt wird bzw. werden.

21. Verfahren nach einem der Ansprüche 15 bis 20,
dadurch gekennzeichnet, daß
während mindestens eines der Zeitintervalle der Spiegel des Boden-Wasser-Gemisches bzw. des Wassers mit unter Druck stehendem Gas beaufschlagt wird.

22. Verfahren nach einem der Ansprüche 15 bis 21,
dadurch gekennzeichnet, daß
während mindestens eines der Zeitintervalle oberhalb des Spiegels des Boden- Wasser-Gemisches bzw. des Wasser Unterdruck erzeugt wird.

23. Verfahren nach einem der Ansprüche 15 bis 22,
dadurch gekennzeichnet, daß
die oberhalb des Spiegels des Boden-Flüssigkeits-Gemisches bzw. des Flüssigkeit-Wasser-Gemisches bzw. der Flüssigkeit sich bildende gas- und oder dampfförmige Phase zur Ausscheidung der in die Gas- und /oder Dampfform zur Aussscheidung der in die Gas- und/oder Dampfform übergegangenen Kontaminationen einer Abscheidevorrichtung in geschlossenem Kreislauf zugeführt wird.

24. Verfahren nach einem der Ansprüche 15 bis 23,
dadurch gekennzeichnet, daß
zur Abscheidung von Schwermetallen ein elektrisches Gleichspannungsfeld an zwei in das Boden-Wasser-Gemisch bzw. in das Wasser eintauchende Elektrodenplatten gelegt wird.

25. Verfahren nach einem der Ansprüche 15 bis 24,
dadurch gekennzeichnet, daß
zur Abscheidung von Quecksilber die Verwirbelung des Boden-Waser-Gemisches in Gegenwart von in das Boden-Wasser-Gemisch bzw. Wasser eintauchenden Kupfernetzen durchgeführt wird.

26. Verfahren nach einem der Ansprüche 15 bis 25,
dadurch gekennzeichnet, daß
in das Boden-Wassser-Gemisch bzw. Wasser Ultraschallwellen eingekoppelt werden.

27. Verfahren nach einem der Ansprüche 15 bis 26,
dadurch gekennzeichnet, daß
gegen Ende des Verfahrens chemische Verbindungen zum Binden der Restmengen der Kontaminationen zugesetzt werden.

28. Verfahren nach Anspruch 27,
dadurch gekennzeichnet, daß
als chemische Verbindung das unter dem Handelsnamen WASTE 3400 erhältliche Polymer zugesetzt wird.

29. Verfahren nach einem der Ansprüche 15 bis 28,
dadurch gekennzeichnet, daß
vor Beendigen des Dekontaminiationsverfahrens Mikrobenstämme zur Verminderung der Restkontamination zugesetzt werden.

30. Vorrichtung zur Durchführen des Verfahrens nach einem oder mehreren der Ansprüche 1 bis 14 oder einem oder mehreren der Ansprüche 15 bis 29,
dadurch gekennzeichnet, daß
die Vorrichtung einen Arbeitsbehälter aufweist, der Behälterboden Düsen für die Zufuhr des im Kreislauf zu führenden Wassers hat, mit Druckluft beaufschlagbare Düsen und eine Überlaufkante zum Entfernen der aufschwimmenden, schaumartigen und Kontaminationen enthaltenden Schichten und mindestens ein Absaugrohr für Wasser hat.

31. Vorrichtung nach Anspruch 30,
dadurch gekennzeichnet, daß
der Arbeitsbehälter um eine Achse in drei Stellungen verschwenkbar ist.

32. Vorrichtung nach Anspruch 30 oder 31,
dadurch gekennzeichnet, daß
der Arbeitsbehälter ein parallel zu seiner Achse angeordnetes und in der zweiten Arbeitstellung des Arbeitsbehälters im Bereich der unteren Scheitellinie der Behälterinnenwandung verlaufendes Absaugrohr für Wasser hat.

33. Vorrichtung nach einem der Ansprüche 30, 31 oder 32,
dadurch gekennzeichnet, daß
die Vorrichtung eine Kippeinrichtung für das Verschwenken des Arbeitsbehälters in die erste, in die zweite und in die dritte Arbeitsstellung hat, in der der Arbeitsbehälter den aufbereiteten Boden in einen Auffangbehälter übergibt.

34. Vorrichtung nach einem der Ansprüche 30 bis 33,
dadurch gekennzeichnet, daß
der Arbeitsbehälter in mindestens einer Seitenwand Absaugdüsen zum Absaugen der sich zuerst gebildeten aufschwimmenden, schaumartigen und Kontaminationen aufweisenden Schicht hat.

35. Vorrichtung nach einem der Ansprüche 30 bis 34,
dadurch gekennzeichnet, daß
der Arbeitsbehälter in mindestens einer Seitenwand Absaugdüsen zum Absaugen der sich zuerst gebildeten auifschwimmenden, schaumartigen und Kontminationen aufweisenden Schicht hat.

36. Vorrichtung nach einem der Ansprüche 30 bis 35,
dadurch gekennzeichnet, daß
der Arbeitsbehälter weitere Düsen für die Zufuhr von Luft, von Inertgas und/oder Reaktionsgas hat.

37. Vorrichtung nach einem der Ansprüche 30 bis 36,
dadurch gekennzeichnet, daß
der Arbeitsbehälter einen Schwingboden oder Ultraschallköpfe hat.

**38.** Vorrichtung nach einem der Ansprüche 30 bis 37,
dadurch gekennzeichnet, daß
der Arbeitsbehälter einen Deckel und Anschlüsse für Einrichtungen zur Erzeugung eines Über- bzw. Unterdruckes hat.

**39.** Vorrichtung nach einem der Ansprüche 30 bis 38,
dadurch gekennzeichnet, daß
der Arbeitsbehälter Plattenelektroden und einen Gleichspannungserzeuger für die Abscheidung der Schwermetalle hat.

**40.** Vorrichtung nach einem der Ansprüche 30 bis 39,
dadurch gekennzeichnet, daß
der Arbeitsbehälter eine Einrichtung mit einer Lichtquelle, Fotodioden und einer Auswerteeinrichtung für das Bestimmen der Absorptionswerte hat.

**41.** Vorrichtung nach einem der Ansprüche 30 bis 40,
dadurch gekennzeichnet, daß
die Vorrichtung eine Einrichtung zum Durchführen der Absorptionsspektralanalyse hat.

**42.** Vorrichtung nach einem der Ansprüche 30 bis 41,
dadurch gekennzeichnet, daß
die Vorrichtung einen Rechner für die Bestimmung der Kontaminationen hat.

**43.** Vorrichtung nach einem der Ansprüche 30 bis 42,
dadurch gekennzeichnet, daß
der Arbeitsbehälter Kupfernetze für das Amalgamieren des Quecksilbers hat.

**44.** Vorrichtung nach einem der Ansprüche 30 bis 43,
dadurch gekennzeichnet, daß
die Vorrichtung in ein Straßenfahrzeug integriert ist und der Arbeitsbehälter um eine in Längsrichtung des Straßenfahrzeuges verlaufende Achse verschwenkbar angeordnet ist.

**45.** Vorrichtung nach einem der Ansprüche 30 bis 44,
dadurch gekennzeichnet, daß
in dem Arbeitsbehälter im Abstand zu den Wänden des Arbeitsbehälters oberhalb der Düsen ( 19 ) eine Platte ( 56 ) mit Durchbrüchen ( 57 ) angeordnet ist.

**46.** Vorrichtung nach Anspruch 45,
dadurch gekennzeichnet, daß

die Durchbrüche Bohrungen, Schlitze oder Langlöcher sind.

**47.** Vorrichtung nach Anspruch 46,
dadurch gekennzeichnet, daß
der Querschnitt ( 58 ) der Durchbrüche auf der Anströmseite der Platte größer ist als der Querschnitt ( 59) der Durchbrüche auf der Abströmseite der Platte.

**48.** Vorrichtung nach Anspruch 47,
dadurch gekennzeichnet, daß
die Durchbrüche im Austrittsbereich eine scharfe Kante zum Zerteilen der Luftblasen aufweisen.

**49.** Vorrichtung zum Durchführen des Verfahrens nach einem oder mehreren der Ansprüche 1 bis 14 oder einem oder mehreren der Ansprüche 15 bis 29,
dadurch gekennzeichnet, daß
der Arbeitsbehälter zwei, in vorgegebenem Abstand zueinander angeordnete, entlang ihrer Mantelflächen in einem streifenförmigen Bereich offene Hohlzylinderabschnitte aufweist, die beiden entlang ihrer Mantelflächen in einem streifenförmigen Bereich offene Hohlzylinderabschnitte mit Stirnplatten ( 62, 63 ) verbunden sind und mit ihnen die offenen Kammern ( 69 und 73 ) begrenzen, die Vorrichtung eine Einrichtung ( 17 ) zum Aufbereiten des in geschlossenem Kreislauf geführten Wassers aufweist, die innere offene Kammer ( 72 ) von der Einrichtung gespeiste Düsen und eine Rückflußleitung zur Einrichtung hat.

**50.** Vorrichtung zum Durchführen des Verfahrens nach einem oder mehreren der Ansprüche 1 bis 14 oder einem oder mehreren der Ansprüche 15 bis 29,
dadurch gekennzeichnet, daß
der Arbeitsbehälter zwei, in vorgegebenem Abstand zueinander angeordnete, entlang ihrer Mantelflächen in einem streifenförmigen Bereich offene Hohlprofilabschnitten von elliptischem Querschnitt aufweist, die beiden entlang ihrer Mantelflächen in einem streifenförmigen Bereich offene Hohlzylinderabschnitte mit Stirnplatten ( 62, 63 ) verbunden sind und mit ihnen die beiden offenen Kammern ( 69 und 73 ) begrenzen, die Vorrichtung eine Einrichtung ( 17 ) zum Aufbereiten des in geschlossenem Kreislauf geführten Wassers aufweist, die innere offene Kammer ( 72 ) von der Einrichtung gespeiste Düsen und eine Rückflußleitung zur Einrichtung hat.

**51.** Vorichtung nach Anspruch 49 oder 50,

dadurch gekennzeichnet, daß
eine in Achsenrichtung zwischen den offenen Hohlzylinderabschnitten bzw. den Hohlprofilabschnitten von elliptischem Querschnitt in ihrem unteren Scheitelbereich verlaufende Trennwand die äußere offene Kammer in zwei Teilkammern unterteilt.

52. Vorichtung nach Anspruch 49 oder 50,
dadurch gekennzeichnet, daß
zwei in Achsenrichtung zwischen den offenen Hohlzylinderabschnitten bzw. den Hohlprofilabschnitten von elliptischem Querschnitt in ihrem unteren Scheitelbereich verlaufende Trennwände die äußere offene Kammer in drei Teilkammern unterteilt und die mittlere Kammer im Bereich der inneren Kammer als Düsen ausgebildete Durchbrüche aufweist.

53. Vorichtung nach einem der Ansprüche 49 bis 52,
dadurch gekennzeichnet, daß
die innere Kammer ( ) senkrecht zu ihrer Achse (ihren Achsen) Düsen aufweist und die äußere offene Kammer eine Abflußleitung hat bzw. ihre beiden äußeren Teilkammern jeweils eine Abflußleitung haben und eine Leitung die mittlere Teilkammer mit der Einrichtung zum Aufbereiten des im Kreislauf geführrten Wassers verbindet.

54. Vorrichtung nach einem der Ansprüche 49 bis 53,
dadurch gekennzeichnet, daß
oberhalb der Düsen im Abstand zu der Innenwandung der inneren offenen Kammer eine Platte mit Düsen angeordnet ist.

55. Vorrichtung nach Anspruch 53,
dadurch gekennzeichnet, daß
die Durchbrüche im Austrittsbereich einen größeren Querschnitt haben als im Eintrittsbereich.

56. Vorrichtung nach einem der Ansprüche 49 bis 54,
dadurch gekennzeichnet, daß
die Vorrichtung auf den Stirnplatten oder auf der äußeren Mantelfläche schwenkbar gelagerte Zapfen aufweist.

57. Vorrichtung zum Durchführen des Verfahrens nach einem oder mehreren der Ansprüche 1 bis 14 oder einem oder mehreren der Ansprüche 15 bis 29,
dadurch gekennzeichnet, daß
der Arbeitsbehälter zwei, in vorgegebenem Abstand zueinander koaxial angeordnete, Hohlzylinderabschnitte aufweist, die beiden offenen Hohlzylinderabschnitte mit einer Bodenplatte ( 88 ) verbunden sind und mit ihr die nach oben offene, die beiden Ränder (90 und 90 ) aufweisende Kammer von kreisringförmigem Querschnitt begrenzen, in der Kammer in vorgegebenem Abstand ein weiterer Hohlzylinderabschnitt angeordnet und mit einer Bodenplatte ( 93 ) unter Ausbildung der nach oben offenen, den Rand ( 94 ) aufweisenden Kammer ( 96) angeordnet ist, zwischen den Bodenplatten Distanzstücke angeordnet sind, die beiden Hohlzylinderabschnitte ( 89 und 92 ) und die beiden Bodenplatten eine, den Rand 90 aufweisende Zwischenkammer ( 95 ) begrenzen, unterhalb des Randes ( 90 ) der Rand ( 94 ) und unterhalb des Randes ( 94 ) der Rand ( 90 ) verläuft, die Vorrichtung eine Einrichtung ( 17 ) zum Aufbereiten des in geschlossenem Kreislauf geführten Wassers aufweist, die innere offene Kammer ( 96 ) von der Einrichtung gespeiste Düsen und eine Rückflußleitung zur Einrichtung hat, die mittlere Kammer wahlweise mit einer Abflußleitung ( 100 ) oder mit der Einrichtung zum Aufbereiten des in geschlossenem Kreislauf geführten Wassers verbindbar ist und die äußere Kammer ( 91 ) eine Abflußleitung mit einer Pumpe ( 8 ) hat.

58. Vorrichtung nach einem der Ansprüche 30 bis 58 oder 49 bis 59,
dadurch gekennzeichnet, daß
der Arbeitsbehälter bzw. die Kammer ein Rohr mit Durchbrüchen ( 57 ) aufweist und über ein Mehrwegeventil ( 97 ) mit der Einrichtung ( 17 ) zum Aufbereiten des in geschlossenem Kreislauf geführten Wassers verbindbar ist.

59. Vorrichtung zum Durchführen des Verfahrens nach einem oder mehreren der Ansprüche 1 bis 14 oder einem oder mehreren der Ansprüche 15 bis 29,
dadurch gekennzeichnet, daß
die Vorrichtung zwei in vorgegebenem Abstand zueinander angeordnete, Hohlprofilabschnitte von zylindrischem oder von elliptischem Querschnitt aufweist, die beiden Hohlprofilabschnitte unter Ausbildung von zwei nach oben offenen Kammern mit einer Bodenplatte verbunden sind, in der inneren Kammer ein doppelwandiger hohlzylindrischer Körper angeordnet ist, die beiden hohlzylindrischen Abschnitte mit kreisringförmigen Stirnplatten unter Ausbildung einer Kammer von kreisringförmigen Querschnitt verbunden sind, die beiden hohlzylindrischen Abschnitte Durchbrüche aufweisen, die Vorrichtung eine Einrichtung ( 17 ) zum Aufbereiten des in geschlossenem Kreislauf geführten Wassers aufweist, eine Leitung die innere nach oben offen Kammer und eine weitere Leitung die Kammer von Kreisringförmigem Querschnitt mit der Einrichtung verbindet.

60. Vorrichtung zum Durchführen des Verfahrens nach einem oder mehreren der Ansprüche 1 bis 14 oder einem oder mehreren der Ansprüche 15 bis 29,
dadurch gekennzeichnet, daß
die Vorrichtung einen Hohlprofilabschnitt von zylindrischem bzw. von elliptischem Querschnitt aufweist, der Hohlprofilabschnitt von zylindrischem bzw. elliptischem Querschnitt unter Ausbildung einer nach oben offenen Kammer mit einer Bodenplatte verbunden ist, in der nach oben offenen Kammer mindestens ein doppelwandiger Körper aus zwei zueinander distanziert angeordneten Hohlzylinderabschnitten bzw. Rechteckprofilabschnitten angeordnet ist, die beiden Hohlzylinderabschnitte bzw. Rechteckprofilabschnitte mit kreisringförmigen bzw. rahmenförmigen Stirnplatten unter Ausbildung einer in sich geschlossenen Kammer von kreisringförmigem bzw. rahmenartigen rechteckigem rahmenartigen Querschnitt verbunden sind, die beiden Hohlzylinderabschnitte bzw. Rechteckprofilabschnitte Durchbrüche aufweisen, die Vorrichtung eine Einrichtung ( 17 ) zum Aufbereiten des in geschlossenem Kreislauf geführten Wassers aufweist, eine Leitung die nach oben offen Kammer und eine weitere Leitung die in sich geschlossene Kammer mit der Einrichtung verbindet.

61. Vorrichtung zum Durchführen des Verfahrens nach einem oder mehreren der Ansprüche 1 bis 14 oder einem oder mehreren der Ansprüche 15 bis 29,
dadurch gekennzeichnet, daß
die Vorrichtung einen zylindrischen Hohlprofilabschnitt bzw. einen hohlen Rechteckprofilabschnitt aufweist, der zylindrische Hohlprofilabschnitt bzw. der hohle Rechteckprofilabschnitt unter Ausbildung einer nach oben offenen Kammer mit einer Bodenplatte verbunden ist, in der nach oben offenen Kammer ein doppelwandiger Körper aus zwei zueinander distanziert angeordneten Hohlzylinderabschnitten bzw. ein doppelwandiger aus zwei zueinander distanziert angeordneten hohlen Rechteckprofilabschnitten angeordnet ist, die beiden Hohlzylinderabschnitte bzw. die beiden hohlen Rechteckprofilabschnitte mit kreisringförmigen Stirnplatten bzw. rahmenartigen Stirnplatten unter Ausbildung einer Kammer von kreisringförmigem bzw. rahmenartigen Querschnitt verbunden sind, die beiden Hohlzylinderabschnitte bzw. die beiden hohlen Rechteckprofile Durchbrüche aufweisen, die Vorrichtung eine Einrichtung ( 17 ) zum Aufbereiten des in geschlossenem Kreislauf geführten Wassers aufweist, eine Leitung die nach oben offen Kammer und eine weitere Leitung die Kammer von kreisringförmigem bzw. rahmenartigen Querschnitt mit der Einrichtung verbindet.

62. Vorrichtung nach Anspruch 61,
dadurch gekennzeichnet, daß
ein Rohr mit Durchbrüchen durch die nach oben offene Kammer und den Körper hindurchgeführt ist, das Rohr bzw. das Rohr und die nach oben offene Kammer jeweils einen Anschluß für die Zufuhr von im Kreislauf geführtem Wasser und/ oder einen Anschluß für Dampf bzw. Wasser und/oder einen Anschluß für eine Einrichtung zum Aufbereiten des in geschlossenem Kreislauf geführten Wassers hat.

63. Vorrichtung nach Anspruch 61 oder 62,
dadurch gekennzeichnet, daß
an dem runden Hohlprofilabschnitt bzw. dem Hohlprofilabschnitt von rechteckigem Querschnitt und an der Bodenplatte jeweils ein pneumatischer bzw. hydraulischer Arbeitszylinder zum Verschwenken der Vorrichtung in eine geneigte Stellung zur Entnahme des Bodens angelenkt sind, der in der Entnahmestellung untere Bereich des nach oben offenen Behälters unterhalb des Düsen aufweisenden Rohres eine bis zum unteren Rand reichende und durch eine Klappe verschließbare Entnahmeöffnung hat.

64. Vorrichtung nach einem der Ansprüche 30 bis 63, dadurch gekennzeichnet, daß
dadurch gekennzeichnet, daß
der Arbeitsbehälter einen Schwingboden oder Ultraschallköpfe hat.

65. Vorrichtung nach einem der Ansprüche 30 bis 64,
dadurch gekennzeichnet, daß
der Arbeitsbehälter einen Deckel und Anschlüsse für Einrichtungen zur Erzeugung eines Über- bzw. Unterdruckes hat.

66. Vorrichtung nach einem der Ansprüche 30 bis 65,
dadurch gekennzeichnet, daß
der Arbeitsbehälter Plattenelektroden und einen Gleichspannungserzeuger für die Abscheidung der Schwermetalle hat.

**67.** Vorrichtung nach einem der Ansprüche 30 bis 66,
dadurch gekennzeichnet, daß
der Arbeitsbehälter eine Einrichtung mit einer Lichtquelle, Fotodioden und einer Auswerteeinrichtung für das Bestimmen der Absorptionswerte hat.

**68.** Vorrichtung nach einem der Ansprüche 30 bis 67,
dadurch gekennzeichnet, daß
die Vorrichtung eine Einrichtung zum Durchführen der Absorptionsspektralanalyse hat.

**69.** Vorrichtung nach einem der Ansprüche 30 bis 68,
dadurch gekennzeichnet, daß
die Vorrichtung einen Rechner für die Bestimmung der Kontaminationen hat.

**70.** Vorrichtung nach einem der Ansprüche 30 bis 70,
dadurch gekennzeichnet, daß
der Arbeitsbehälter Kupfernetze für das Amalgamieren des Quecksilbers hat.

**71.** Vorrichtung nach einem oder mehren der Ansprüche 30 bis 70,
dadurch gekennzeichnet, daß
die eine Vorrichtung oder mehrere auf einem Schiff angeordnet ist.

**72.** Vorrichtung nach einem oder mehreren der Ansprüche 30 bis 71,
dadurch gekennzeichnet, daß
die Vorrichtung mit Transportmitteln wie Hubschrauber oder dergleichen vom Schiff aus zum Einsatz in Uferzonen und/oder in Küstenbereiche bringbar ist.

Figur 1

Figur 2

## Figur 3

## Figur 4

29

Figur 5a

Figur 5b

Figur 6a

Figur 6b

Figur 6c

Figur 7b

Figur 7

Figur 8

Figur 9

Figur 10

Figur 11

103 108 107 114     104        102

114

113

106

109

110

111

105

112

119

121

115

122

116

117

118

120

16

17'

Figur 12

Figur 13

Figur 14

Figur 15

156

156

156

156

Figur 16